(19) Europäisches Patentamt
European Patent Office
Office européen des brevets

(11) **EP 4 373 157 A1**

(12) **EUROPEAN PATENT APPLICATION**
published in accordance with Art. 153(4) EPC

(43) Date of publication:
**22.05.2024   Bulletin 2024/21**

(21) Application number: **22842521.1**

(22) Date of filing: **15.07.2022**

(51) International Patent Classification (IPC):
*H04W 36/00* (2009.01)        *H04W 36/08* (2009.01)
*H04W 40/36* (2009.01)        *H04W 40/22* (2009.01)
*H04W 92/18* (2009.01)        *H04W 76/11* (2018.01)

(52) Cooperative Patent Classification (CPC):
H04W 36/08; H04W 36/00; H04W 40/22;
H04W 40/36; H04W 76/11; H04W 92/18

(86) International application number:
**PCT/KR2022/010392**

(87) International publication number:
**WO 2023/287259 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 15.07.2021   KR 20210092629
22.07.2021   KR 20210096501
28.07.2021   KR 20210099369
05.08.2021   US 202163229992 P
17.08.2021   US 202163234225 P
18.08.2021   US 202163234263 P
19.08.2021   KR 20210109751
10.09.2021   KR 20210120709
26.11.2021   KR 20210165796
19.01.2022   KR 20220007971

(71) Applicant: **LG Electronics Inc.**
**Yeongdeungpo-gu**
**Seoul 07336 (KR)**

(72) Inventors:
• **BACK, Seoyoung**
  **Seoul 06772 (KR)**
• **PARK, Giwon**
  **Seoul 06772 (KR)**
• **SEO, Hanbyul**
  **Seoul 06772 (KR)**
• **LEE, Seungmin**
  **Seoul 06772 (KR)**
• **HONG, Jongwoo**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **OPERATION METHOD RELATED TO HANDOVER IN SIDELINK RELAY IN WIRELESS COMMUNICATION SYSTEM**

(57)    An embodiment relates to a handover-related operation method of a remote UE in a wireless communication system, the method comprising: performing a measurement on a plurality of candidate relay UEs by a remote UE; transmitting a measurement report to a first base station by the remote UE; establishing an RRC connection with one relay UE selected from among the plurality of candidate relay UEs, by the remote UE; and transmitting a signal to the relay UE by the remote UE, wherein the remote UE transmits ID information related to an RRC reconfiguration procedure between the relay UE and a second base station to the first base station.

FIG. 13

**Description**

**TECHNICAL FIELD**

The following description relates to a wireless communication system, and more particularly, to an operation method and device related to handover of a relay user equipment (UE) in sidelink.

**BACKGROUND**

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

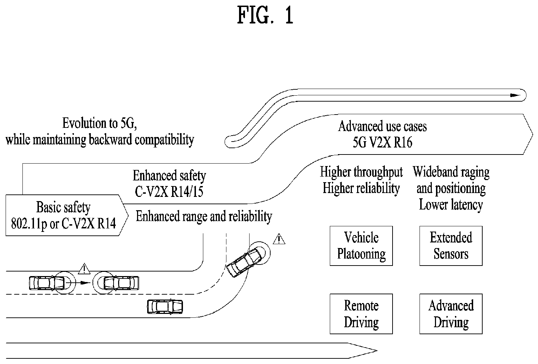

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

## DETAILED DESCRIPTION

## TECHNICAL SOLUTION

An object of embodiment(s) is a technology required for handover of a remote user equipment (UE) when a serving gNB of the remote UE in sidelink and a gNB related to a selected relay UE are different from each other.

## TECHNICAL SOLUTION

According to an embodiment, an operation method related to handover of a remote user equipment (UE) in a wireless communication system includes performing a measurement on a plurality of candidate relay UEs, by the remote UE, transmitting a measurement report to a first base station (BS), by the remote UE, establishing an RRC connection with one relay UE selected from the plurality of candidate relay UEs, by the remote UE, and transmitting a signal to the relay UE, by the remote UE, wherein the remote UE transmits ID information related to an RRC reconfiguration procedure between the relay UE and a second BS to the first BS.

According to an embodiment, a remote user equipment (UE) in a wireless communication system includes at least one processor, and at least one computer memory operatively connected to the at least one processor and configured to store instructions that when executed causes the at least one processor to perform operations including performing a measurement on a plurality of candidate relay UEs, transmitting a measurement report to a first base station (BS), establishing an RRC connection with one relay UE selected from the plurality of candidate relay UEs, and transmitting a signal to the relay UE, wherein the remote UE transmits ID information related to an RRC reconfiguration procedure between the relay UE and a second BS to the first BS.

An embodiment provides a processor for performing operations for a relay user equipment (UE) in a wireless communication system, the operations including performing a measurement on a plurality of candidate relay UEs, transmitting a measurement report to a first base station (BS), establishing an RRC connection with one relay UE selected from the plurality of candidate relay UEs, and transmitting a signal to the relay UE, wherein the remote UE transmits ID information related to an RRC reconfiguration procedure between the relay UE and a second BS to the first BS.

An embodiment provides a non-volatile computer-readable storage medium storing at least one computer program that includes instructions that, when executed by at least one processor, causes the at least one processor to perform operations for a relay user equipment (UE), the operations including performing a measurement on a plurality of candidate relay UEs, transmitting a measurement report to a first base station (BS), establishing an RRC connection with one relay UE selected from the plurality of candidate relay UEs, and transmitting a signal to the relay UE, wherein the remote UE transmits ID information related to an RRC reconfiguration procedure between the relay UE and a second BS to the first BS.

According to an embodiment, an operation method of a first base station (BS) related to handover of a remote user equipment (UE) in a wireless communication system includes receiving a measurement report for a plurality of candidate relay UEs from a remote UE by the first BS, and receiving a signal from the remote UE by the first BS, through one relay UE selected from among the plurality of candidate relay UEs in which an RRC connection with the remote UE is established, by the first BS, wherein the remote UE transmits ID information related to an RRC reconfiguration procedure between the relay UE and a second BS, to the first BS.

According to an embodiment, a first base station (BS) in a wireless communication system includes at least one processor, and at least one computer memory operatively connected to the at least one processor and configured to store instructions that when executed causes the at least one processor to perform operations including receiving a measurement report for a plurality of candidate relay UEs from a remote UE, and receiving a signal from the remote UE, through one relay UE selected from among the plurality of candidate relay UEs in which an RRC connection with the remote UE is established, wherein the first BS receives ID information related to an RRC reconfiguration procedure between the relay UE and a second BS, from the remote UE.

The ID information may be delivered to the second BS from the first BS.

The RRC reconfiguration procedure may be for the relay UE to operate as a relay of the remote UE.

The ID information may be included in the measurement report.

The ID information may be a layer2 ID allocated to the relay UE by the second BS.

The layer2 ID may be included in a discovery message and a PC5 RRC message that are transmitted by the relay UE.

The ID information may be a local ID allocated separately from a layer2 ID to the relay UE by the second BS.

The first BS may determine path switching to the relay UE of the remote UE.

The relay UE may be selected by one of the remote UE or the first BS.

The remote UE may communicate with at least one of another UE, a UE related to an autonomous driving vehicle, a base station (BS), or a network.

## ADVANTAGEOUS EFFECTS

According to an embodiment, a target gNB may check/identify/specify which UE a selected relay UE is through ID information and perform an RRC reconfiguration procedure with the relay UE.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram comparing vehicle-to-everything (V2X) communication based on pre-new radio access technology (pre-NR) with V2X communication based on NR;

FIG. 2 is a diagram illustrating the structure of a long term evolution (LTE) system according to an embodiment of the present disclosure;

FIG. 3 is a diagram illustrating user-plane and control-plane radio protocol architectures according to an embodiment of the present disclosure;

FIG. 4 is a diagram illustrating the structure of an NR system according to an embodiment of the present disclosure;

FIG. 5 is a diagram illustrating functional split between a next generation radio access network (NG-RAN) and a 5th generation core network (5GC) according to an embodiment of the present disclosure;

FIG. 6 is a diagram illustrating the structure of an NR radio frame to which embodiment(s) of the present disclosure is applicable;

FIG. 7 is a diagram illustrating a slot structure of an NR frame according to an embodiment of the present disclosure;

FIG. 8 is a diagram illustrating radio protocol architectures for sidelink (SL) communication according to an embodiment of the present disclosure;

FIG. 9 is a diagram illustrating radio protocol architectures for SL communication according to an embodiment of the present disclosure;

FIG. 10 is a diagram illustrating a procedure for performing V2X or SL communication by a UE according to a transmission mode;

FIG. 11 to FIG.18 are diagrams to describe embodiment(s); and

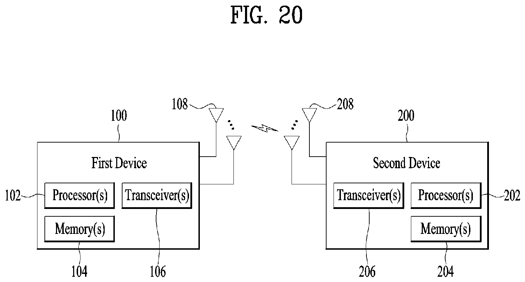

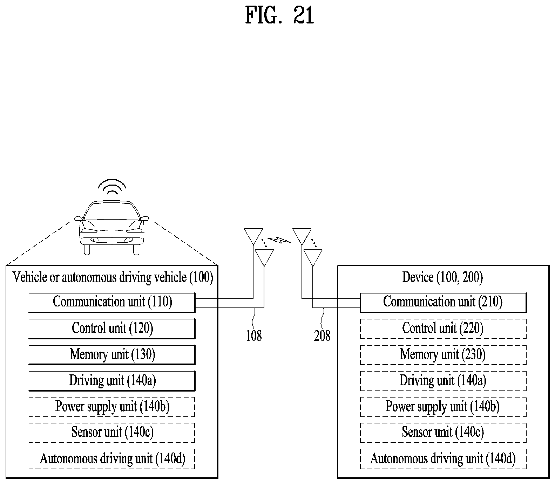

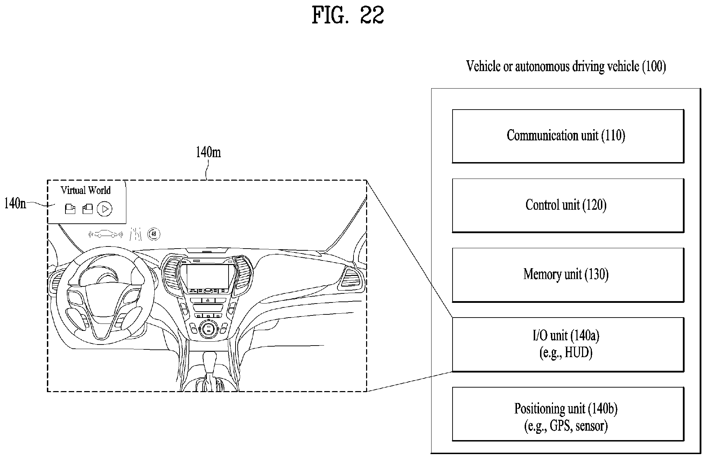

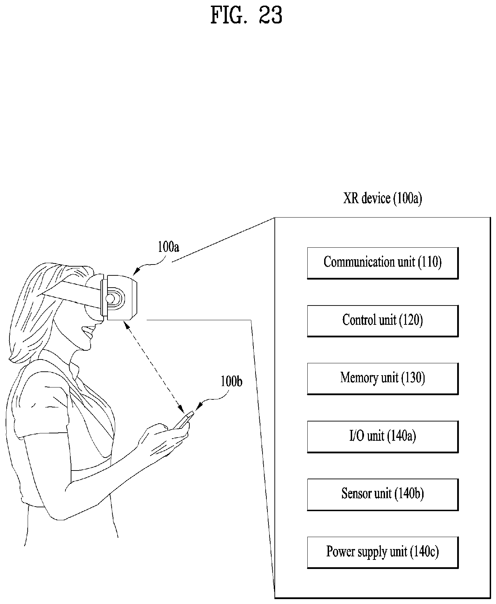

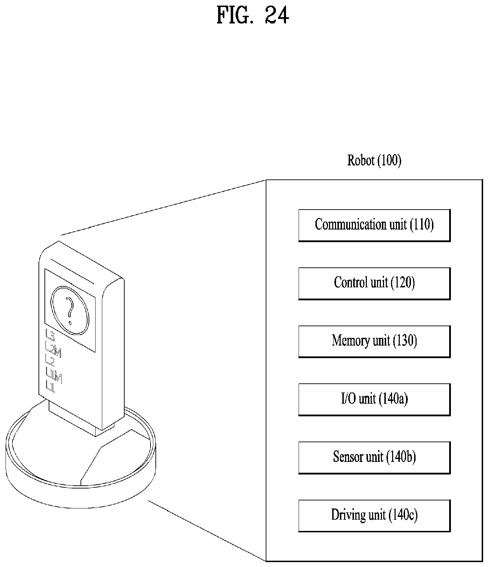

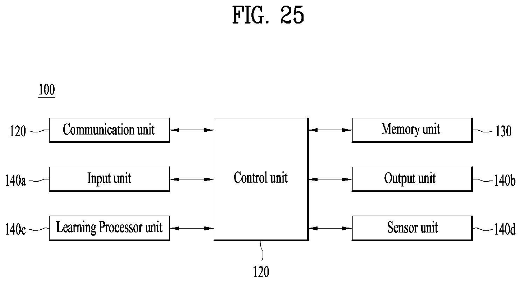

FIGs. 19 to 25 are diagrams illustrating various devices to which embodiment(s) are applicable.

## BEST MODE

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, 5th generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

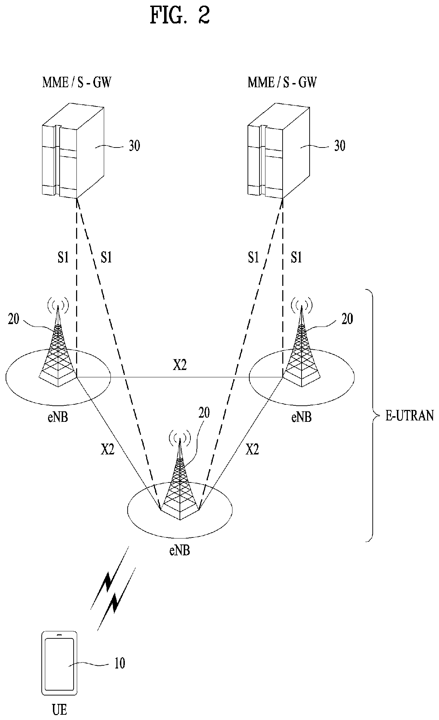

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

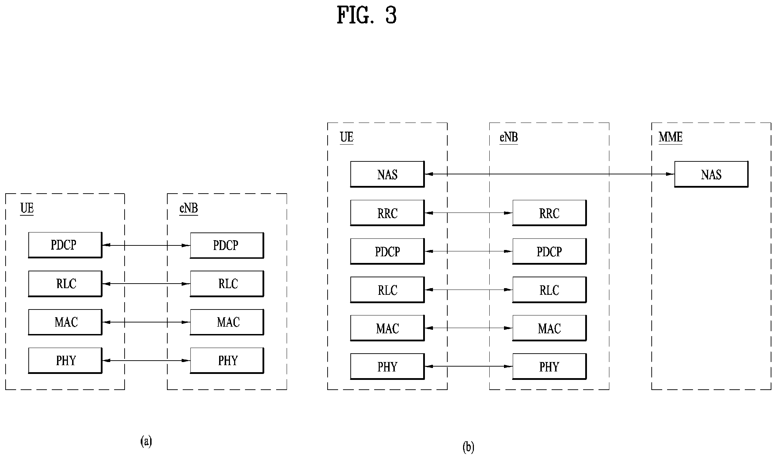

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

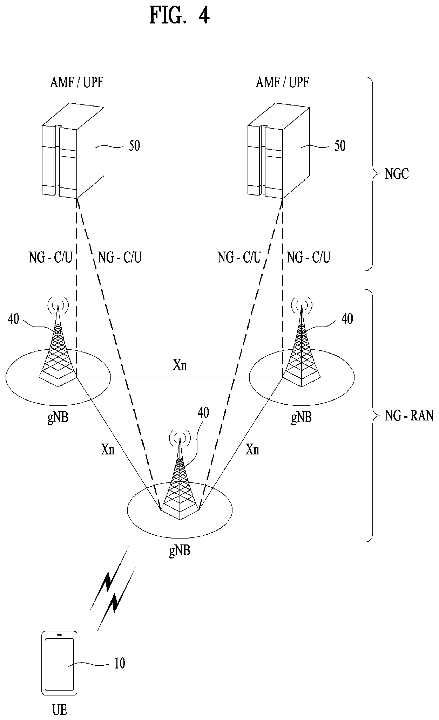

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

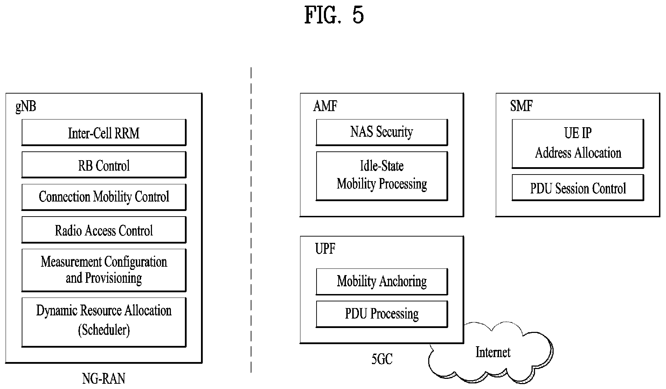

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

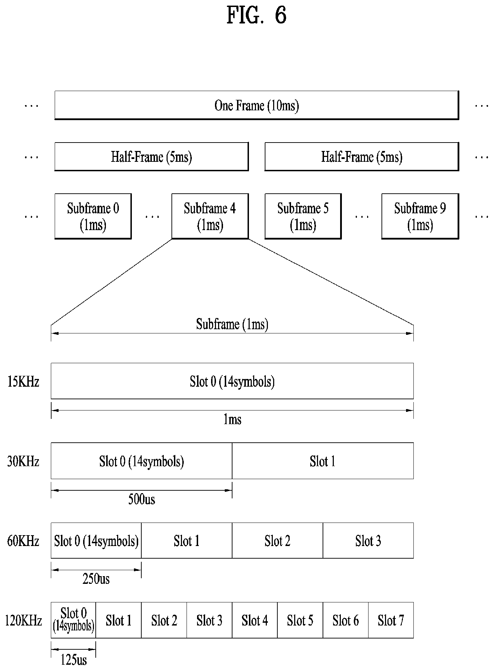

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N_{slot}^{symb}$, the number of slots per frame $N_{frame,u}^{slot}$, and the number of slots per subframe $N_{subframe,u}^{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15kHz, a wide area in traditional cellular bands may be supported, while with an SCS of 30kHz/60kHz, a dense urban area, a lower latency, and a wide carrier bandwidth may be supported. With an SCS of 60kHz or higher, a bandwidth larger than 24.25GHz may be supported to overcome phase noise.

An NR frequency band may be defined by two types of frequency ranges, FR1 and FR2. The numerals in each frequency range may be changed. For example, the two types of frequency ranges may be given in [Table 3]. In the NR system, FR1 may be a "sub 6GHz range" and FR2 may be an "above 6GHz range" called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerals in a frequency range may be changed in the NR system. For example, FR1 may range from 410MHz to 7125MHz as listed in [Table 4]. That is, FR1 may include a frequency band of 6GHz (or 5850, 5900, and 5925MHz) or above. For example, the frequency band of 6GHz (or 5850, 5900, and 5925MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

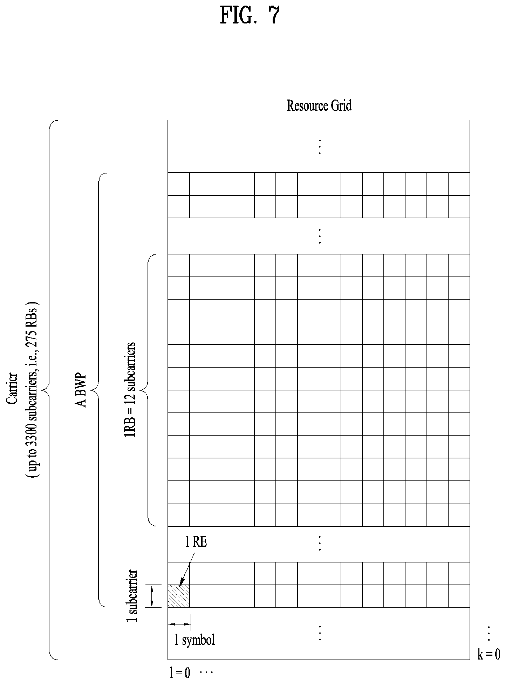

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

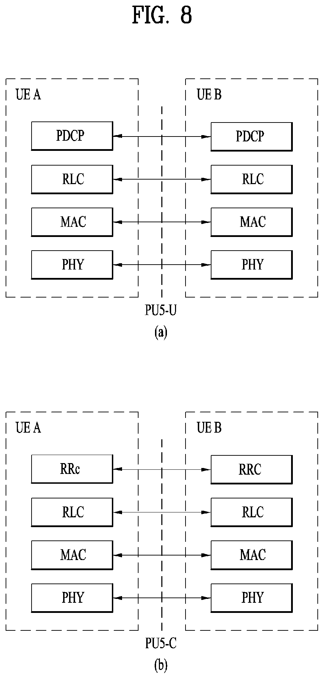

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

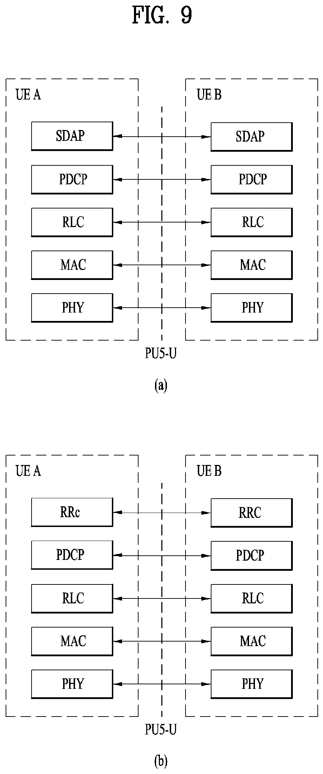

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

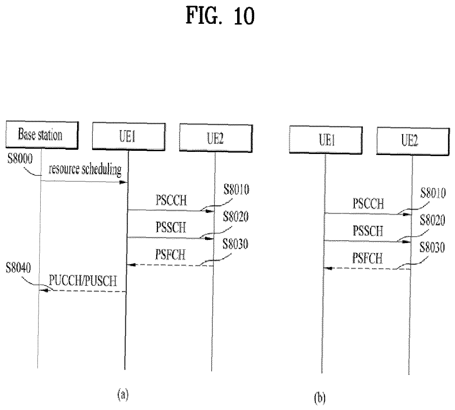

FIG. 10 illustrates a procedure of performing V2X or SL communication by a UE depending on a transmission mode according to an embodiment of the present disclosure. The embodiemnt of FIG. 10 may be combined with various embodiemnts of the present disclosure. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 10 (a) illustrates a UE operation related to LTE transmission mode 1 or LTE transmission mode 3. Alternatively, for example, FIG. 10 (a) illustrates a UE operation related to NR resource allocation mode 1. For example, LTE transmission mode 1 may apply to general SL communication, and LTE transmission mode 3 may apply to V2X communication.

For example, FIG. 10 (b) illustrates a UE operation related to LTE transmission mode 2 or LTE transmission mode 4. Alternatively, for example, FIG. 10 (b) illustrates a UE operation related to NR resource allocation mode 2.

Referring to FIG. 10 (a), in LTE transmission mode 1, LTE transmission mode 3, or NR resource allocation mode 1, a BS may schedule an SL resource to be used for SL transmission by a UE. For example, in operation S8000, the BS may transmit information related to an SL resource and/or information related to a UE resoruce to a first UE. For exmaple, the UL resource may include a PUCCH resource and/pr a PUSCH resource. For exmaple, the UL resource may be a resource to report SL HARQ feedback to the BS.

For example, a first UE may receive information related to a Dynamic Grant (DG) resource and/or information related to a Configured Grant (CG) resource from a BS. For example, the CG resource may include a CG type 1 resource or a CG type 2 resource. In the present specification, the DG resource may be a resource that the BS configures/allocates to the first UE over Downlink Control Information (DCI). In the present specification, the CG resource may be a (periodic) resource configured/allocated by the BS to the first UE over a DCI and/or an RRC message. For example, in the case of the CG type 1 resource, the BS may transmit an RRC message including information related to the CG resource to the first UE. For example, in the case of the CG type 2 resource, the BS may transmit an RRC message including information related to the CG resource to the first UE, and the BS may transmit DCI related to activation or release of the CG resource to the first UE.

In operation S8010, the first UE may transmit PSCCH (e.g., Sidelink Control Information (SCI) or 1st-stage SCI) to a second UE based on the resource scheduling. In operation S8020, the first UE may transmit PSSCH (e.g., 2nd-stage SCI, MAC PDU, data, etc.) related to the PSCCH to the second UE. In operation S8030, the first UE may receive PSFCH related to the PSCCH/PSSCH from the second UE. For example, HARQ feedback information (e.g., NACK information or ACK information) may be received from the second UE over the PSFCH. In operation S8040, the first UE may transmit/report HARQ feedback information to the BS over PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1. Table 5 shows one example of DCI for scheduling of SL.

[Table 5]

| |
|---|
| 7.3.1.4.1 Format 3_0<br>DCI format 3_0 is used for scheduling of NR PSCCH and NR PSSCH in one cell.<br>The following information is transmitted by means of the DCI format 3_0 with CRC scrambled by SL-RNTI or SL-CS-RNTI: |

(continued)

### 7.3.1.4.1 Format 3_0

- Resource pool index - $\lceil \log_2 I \rceil$ bits, where $I$ is the number of resource pools for transmission configured by the higher layer parameter *sl-TxPoolScheduling.*
- Time gap - 3 bits determined by higher layer parameter *sl-DCI-ToSL-Trans,* as defined in clause 8.1.2.1 of [6, TS 38.214]
- HARQ process number - 4 bits.
- New data indicator - 1 bit.

- Lowest index of the subchannel allocation to the initial transmission - $\lceil \log_2(N_{\text{subChannel}}^{\text{SL}}) \rceil$ bits as defined in clause 8.1.2.2 of [6, TS 38.214]
- SCI format 1-A fields according to clause 8.3.1.1:
    - Frequency resource assignment.
    - Time resource assignment.

- PSFCH-to-HARQ feedback timing indicator - $\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]
- PUCCH resource indicator - 3 bits as defined in clause 16.5 of [5, TS 38.213].
- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits
    - 2 bits as defined in clause 16.5.2 of [5, TS 38.213] if the UE is configured with *pdsch-HARQ-ACK-Codebook = dynamic*
    - 2 bits as defined in clause 16.5.1 of [5, TS 38.213] if the UE is configured with *pdsch-HARQ-ACK-Codebook = semi-static*
- Padding bits, if required

If multiple transmit resource pools are provided in *sl-TxPoolScheduling,* zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

### 7.3.1.4.2 Format 3_1

DCI format 3_1 is used for scheduling of LTE PSCCH and LTE PSSCH in one cell.

The following information is transmitted by means of the DCI format 3_1 with CRC scrambled by SL Semi-Persistent Scheduling V-RNTI:

- Timing offset - 3 bits determined by higher layer parameter *sl-TimeOffsetEUTRA-List,* as defined in clause 16.6 of [5, TS 38.213]
- Carrier indicator -3 bits as defined in 5.3.3.1.9A of [11, TS 36.212].

- Lowest index of the subchannel allocation to the initial transmission - $\lceil \log_2(N_{\text{subchannel}}^{\text{SL}}) \rceil$ bits as defined in 5.3.3.1.9A of [11, TS 36.212].
- Frequency resource location of initial transmission and retransmission, as defined in 5.3.3.1.9A of [11, TS 36.212]
- Time gap between initial transmission and retransmission, as defined in 5.3.3.1.9A of [11, TS 36.212]
- SL index - 2 bits as defined in 5.3.3.1.9A of [11, TS 36.212]
- SL SPS configuration index - 3 bits as defined in clause 5.3.3.1.9A of [11, TS 36.212].
- Activation/release indication - 1 bit as defined in clause 5.3.3.1.9A of [11, TS 36.212].

Referring to FIG. 10(b), for LTE transmission mode 2, LTE transmission mode 4, or NR resource allocation mode 2, a UE may determine an SL transmission resource from among SL resources configured by a BS/network or preconfigured SL resources. For example, the configured SL resources or preconfigured SL resources may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in operation S8010, the first UE having self-selected a resource in the resource pool may transmit a PSCCH (e.g., Sidelink Control Information (SCI) or 1st-stage SCI) to the second UE using the resource. In operation S8020, the first UE may transmit a PSSCH (e.g., 2nd-stage SCI, MAC PDU, data, etc.) related to the PSCCH to the second UE. In operation S8030, the first UE may receive a PSFCH related to the PSCCH/PSSCH from the second UE.

Referring to FIG. 10(a) or FIG. 10(b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as 1st SCI, 1st-stage SCI, or a 1st-stage SCI format, and the SCI transmitted on the PSSCH may be referred to as 2nd SCI, 2nd SCI, or a 2nd-stage SCI format. For example, the 1st-stage SCI format may include SCI format 1-A, and the 2nd-stage SCI format may include SCI format 2-A and/or SCI format 2-B. Table 6 shows one example of a 1st-stage SCI format.

[Table 6]

---

**8.3.1.1 SCI format 1-A**

SCI format 1-A is used for the scheduling of PSSCH and 2nd-stage-SCI on PSSCH

The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment - $\left\lceil \log_2\left(\frac{N_{subChannel}^{SL}\left(N_{subChannel}^{SL} + 1\right)}{2}\right) \right\rceil$ bits when the value of the higher layer parameter *sl-MaxNumPerReserve* is configured to 2; otherwise

$\left\lceil \log_2\left(\frac{N_{subChannel}^{SL}\left(N_{subChannel}^{SL} + 1\right)\left(2N_{subChannel}^{SL} + 1\right)}{6}\right) \right\rceil$ bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period - $\left\lceil \log_2 N_{rsv\_period} \right\rceil$ bits as defined in clause 16.4 of [5, TS 38.213], where $N_{rsv\text{-}period}$ is the number of entries in the higher layer parameter *sl-ResourceReservePeriodList,* if higher layer parameter *sl-MultiReserveResource* is configured; 0 bit otherwise.

- DMRS pattern - $\left\lceil \log_2 N_{pattern} \right\rceil$ bits as defined in clause 8.4.1.1.2 of [4, TS 38.211], where $N_{pattern}$ is the number of DMRS patterns configured by higher layer parameter *sl-PSSCH-DMRS-TimePatternList.*

- 2nd-stage SCI format - 2 bits as defined in Table 8.3.1.1-1.

- Beta_offset indicator - 2 bits as provided by higher layer parameter *sl-BetaOffsets2ndSCI* and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

- Additional MCS table indicator - as defined in clause 8.1.3.1 of [6, TS 38.214]: 1 bit if one MCS table is configured by higher layer parameter *sl-Additional- MCS-Table*; 2 bits if two MCS tables are configured by higher layer parameter *sl-Additional-MCS-Table*; 0 bit otherwise.

- PSFCH overhead indication - 1 bit as defined clause 8.1.3.2 of [6, TS 38.214] if higher layer parameter *sl-PSFCH-Period* = 2 or 4; 0 bit otherwise.

---

(continued)

| - Reserved - a number of bits as determined by higher layer parameter *sl-NumReservedBits,* with value set to zero. |
| --- |

Table 7 shows one example of a 2nd-stage SCI format.

[Table 7]

8.4 Sidelink control information on PSSCH

SCI carried on PSSCH is a 2nd-stage SCI, which transports sidelink scheduling information.

8.4.1 2nd-stage SCI formats

The fields defined in each of the $2^{nd}$-stage SCI formats below are mapped to the information bits $a_0$ to $a_{A-1}$ as follows:

Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$.

8.4.1.1 SCI format 2-A

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits.
- New data indicator - 1 bit.
- Redundancy version - 2 bits as defined in Table 7.3.1.1.1-2.
- Source ID - 8 bits as defined in clause 8.1 of [6, TS 38.214].
- Destination ID - 16 bits as defined in clause 8.1 of [6, TS 38.214].
- HARQ feedback enabled/disabled indicator - 1 bit as defined in clause 16.3 of [5, TS 38.213].
- Cast type indicator - 2 bits as defined in Table 8.4.1.1-1 and in clause 8.1 of [6, TS 38.214].
- CSI request - 1 bit as defined in clause 8.2.1 of [6, TS 38.214] and in clause 8.1 of [6, TS 38.214].

Referring to FIG. 10(a) or FIG. 10(b), in operation S8030, the first UE may receive the PSFCH based on Table 8. For example, the first UE and the second UE may determine a PSFCH resource based on Table 8, and the second UE may transmit HARQ feedback to the first UE using the PSFCH resource.

[Table 8]

16.3 UE procedure for reporting HARQ-ACK on sidelink

A UE can be indicated by an SCI format scheduling a PSSCH reception to transmit a PSFCH with HARQ-ACK information in response to the PSSCH reception. The UE provides HARQ-ACK information that includes ACK or NACK, or only NACK.

A UE can be provided, by *sl-PSFCH-Period,* a number of slots in a resource pool for a period of PSFCH transmission occasion resources. If the number is zero, PSFCH transmissions from the UE in the resource pool are disabled.

A UE expects that a slot $t'^{SL}_k \ (0 \le k < T'_{max})$, has a PSFCH transmission occasion resource if $k \bmod N^{\text{PSFCH}}_{\text{PSSCH}} = 0$, where $t'^{SL}_k$ is defined in [6, TS 38.214], and $T'_{max}$ is a number of slots that belong to the resource pool within 10240 msec according to [6, TS 38.214], and $N^{\text{PSFCH}}_{\text{PSSCH}}$ is provided by *sl-PSFCH-Period.*

A UE may be indicated by higher layers to not transmit a PSFCH in response to a PSSCH reception [11, TS 38.321]. If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH

transmission in the resource pool. The UE transmits the PSFCH in a first slot that includes PSFCH resources and is at least a number of slots, provided by *sl-MinTimeGapPSFCH,* of the resource pool after a last slot of the PSSCH reception.

(continued)

A UE is provided by *sl-PSFCH-RB-Set* a set of $M_{\text{PRB, set}}^{\text{PSFCH}}$ PRBs in a resource pool for PSFCH transmission in a PRB of the resource pool. For a number of $N_{\text{subch}}$ subchannels for the resource pool, provided by *sl-NumSubchannel,* and a number of PSSCH slots associated with a PSFCH slot that is less than or equal to $N_{\text{PSSCH}}^{\text{PSFCH}}$, the UE allocates the

$$\left[\left(i + j \cdot N_{\text{PSSCH}}^{\text{PSFCH}}\right) \cdot M_{\text{subch, slot}}^{\text{PSFCH}}, \left(i + 1 + j \cdot N_{\text{PSSCH}}^{\text{PSFCH}}\right) \cdot M_{\text{subch, slot}}^{\text{PSFCH}} - 1\right] \text{ PRBs from the } M_{\text{PRB, set}}^{\text{PSFCH}}$$

PRBs to slot i among the PSSCH slots associated with the PSFCH slot and sub-channel *j*, where

$$M_{\text{subch, slot}}^{\text{PSFCH}} = M_{\text{PRB, set}}^{\text{PSFCH}} / \left(N_{\text{subch}} \cdot N_{\text{PSSCH}}^{\text{PSFCH}}\right), 0 \le i < N_{\text{PSSCH}}^{\text{PSFCH}}, 0 < j < N_{\text{subch}},$$ and the allocation starts in an ascending order of i and continues in an ascending order of *j*. The UE expects that $M_{\text{PRB, set}}^{\text{PSFCH}}$ is a multiple of $N_{\text{subch}} \cdot N_{\text{PSSCH}}^{\text{PSFCH}}$.

The second OFDM symbol *l'* of PSFCH transmission in a slot is defined as *l'* = *sl-StartSymbol* + *sl-LengthSymbols* - 2 .

A UE determines a number of PSFCH resources available for multiplexing HARQ-ACK information in a PSFCH transmission as $R_{\text{PRB, CS}}^{\text{PSFCH}} = N_{\text{type}}^{\text{PSFCH}} \cdot M_{\text{subch, slot}}^{\text{PSFCH}} \cdot N_{\text{CS}}^{\text{PSFCH}}$ where $N_{\text{CS}}^{\text{PSFCH}}$ is a number of cyclic shift pairs for the resource pool provided by *sl-NumMuxCS-Pair* and, based on an indication by *sl-PSFCH-CandidateResourceType,*

- if *sl-PSFCH-CandidateResourceType* is configured as *startSubCH,* $N_{\text{type}}^{\text{PSFCH}} = 1$ and the $M_{\text{subch, slot}}^{\text{PSFCH}}$ PRBs are associated with the starting sub-channel of the corresponding PSSCH;

- if *sl-PSFCH-CandidateResourceType* is configured as *allocSubCH,* $N_{\text{type}}^{\text{PSFCH}} = N_{\text{subch}}^{\text{PSSCH}}$ and the $N_{\text{subch}}^{\text{PSSCH}} \cdot M_{\text{subch, slot}}^{\text{PSFCH}}$ PRBs are associated with the $N_{\text{subch}}^{\text{PSSCH}}$ sub-channels of the corresponding PSSCH. The PSFCH resources are first indexed according to an ascending order of the PRB index, from the $N_{\text{type}}^{\text{PSFCH}} \cdot M_{\text{subch, slot}}^{\text{PSFCH}}$ PRBs, and then according to an ascending order of the cyclic shift pair index from the $N_{\text{CS}}^{\text{PSFCH}}$ cyclic shift pairs.

A UE determines an index of a PSFCH resource for a PSFCH transmission in response to a PSSCH reception as $(P_{\text{ID}} + M_{\text{ID}}) \bmod R_{\text{PRB, CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.

A UE determines a $m_0$ value, for computing a value of cyclic shift $\alpha$ [4, TS 38.211], from a cyclic shift pair index corresponding to a PSFCH resource index and from $N_{\text{CS}}^{\text{PSFCH}}$ using Table 16.3-1.

Referring to FIG. 10(a), in operation S8040, the first UE may transmit SL HARQ feedback to the BS over the PUCCH and/or PUSCH based on Table 9.

[Table 9]

| 16.5 UE procedure for reporting HARQ-ACK on uplink |
| --- |

report that UE in A UE can be provided PUCCH resources or PUSCH resources [12, TS 38.331] to HARQ-ACK information that the UE generates based on HARQ-ACK information the UE obtains from PSFCH receptions, or from absence of PSFCH receptions. The reports HARQ-ACK information on the primary cell of the PUCCH group, as described clause 9, of the cell where the UE monitors PDCCH for detection of DCI format 3_0.

For SL configured grant Type 1 or Type 2 PSSCH transmissions by a UE within a time period provided by *sl-PeriodCG,* the UE generates one HARQ-ACK information bit in response to the PSFCH receptions to multiplex in a PUCCH transmission occasion that is after a last time resource, in a set of time resources.

For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.

From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable

- for one or more PSFCH reception occasions associated with SCI format 2-A with Cast type indicator field value of "10"

> - generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK

- for one or more PSFCH reception occasions associated with SCI format 2-A with Cast type indicator field value of "01"

> - generate ACK if the UE determines ACK from at least one PSFCH reception occasion, from the number of PSFCH reception occasions corresponding to PSSCH transmissions, in PSFCH resources corresponding to every identity $M_{ID}$
>
> of the UEs that the UE expects to receive the PSSCH, as described in clause 16.3; otherwise, generate NACK

- for one or more PSFCH reception occasions associated with SCI format 2-B or SCI format 2-A with Cast type indicator field value of "11"

> - generate ACK when the UE determines absence of PSFCH reception for the last PSFCH reception occasion from the number of PSFCH reception occasions corresponding to PSSCH transmissions; otherwise, generate NACK

After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.

The UE generates a NACK when, due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission.

The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization.

The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.

Sidelink (SL) Discontinuous Reception (DRX)

A MAC entity may be configured by an RRC as a DRX function of controlling a PDCCH monitoring activity of a UE for C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI, and SL Semi-Persistent Scheduling V-RNTI of the MAC entity. When using a DRX operation, a MAC entity should monitor PDCCH according to prescribed requirements. When DRX is configured in RRC_CONNECTED, a MAC entity may discontinuously monitor PDCCH for all activated serving cells.

RRC may control a DRX operation by configuring the following parameters.

- drx-onDurationTimer : Duration time upon DRX cycle start
- drx-SlotOffset: Delay before drx-onDurationTimer start
- drx-InactivityTimer: Duration time after PDCCH that indicates new UL or DL transmission for a MAC entity
- drx-RetransmissionTimerDL (per DL HARQ process except for the broadcast process): Maximum duration time until DL retransmission is received
- drx-RetransmissionTimerUL (per UL HARQ process): Maximum time until a grant for retransmission is received
- drx-LongCycleStartOffset: Long DRX cycle and drx-StartOffset that define a subframe in which Long and Short DRX cycles start
- drx-ShortCycle(optional): Short DRX cycle
- drx-ShortCycleTimer(optional): Period for a UE to follow a short CRX cycle
- drx-HARQ-RTT-TimerDL (per DL HARQ process except for the broadcast process): Minimum duration time before DL allocation for HARQ retransmission is predicted by a MAC entity
- drx-HARQ-RTT-TimerUL (per UL HARQ process): Minimum duration time before a UL HARQ retransmission grant is predicted by a MAC entity
- drx-RetransmissionTimerSL (per HARQ process): Maximum period until a grant for SL retransmission is received
- drx-HARQ-RTT-TimerSL (per HARQ process): Minimum duration time before an SL retransmission grant is predicted by a MAC entity
- ps-Wakeup(optional): Configuration for starting drx-on DurationTimer connected when DCP is monitored but not detected
- ps-TransmitOtherPeriodicCSI(optional): Configuration to report a periodic CSI that is not L1-RSRP on PUCCH for a time duration period indicated by drx-onDurationTimer when connected drx-onDurationTimer does not start despite that DCP is configured
- ps-TransmitPeriodicL1-RSRP(optional): Configuration to transmit a periodic CSI that is L1-RSRP on PUCCH for a time indicated by a drx-onDurationTimer when a connected drx-onDurationTimer does not start despite that DCP is configured

A serving cell of a MAC entity may be configured by RRC in two DRX groups having separate DRX parameters. When the RRC does not configure a secondary DRX group, a single DRX group exists only and all serving cells belong to the single DRX group. When two DRX groups are configured, each serving cell is uniquely allocated to each of the two groups. DRX parameters separately configured for each DRX group include drx-onDurationTimer and di-x-InactivityTimer. A DRX parameter common to a DRX group is as follows.

drx-onDurationTimer, di-x-InactivityTimer.

DRX parameters common to a DRX group are as follows.

drx-SlotOffset, drx-RetransmissionTimerDL, drx-Retrans drx-SlotOffset, drx-RetransmissionTimerDL, di-x-RetransmissionTimerUL, drx-LongCycleStartOffset, drx-ShortCycle (optional), drx-ShortCycleTimer (optional), drx-HARQ-RTT-TimerDL, and di-x-HARQ-RTT-TimerUL.

For the DRX operation in the prior art, di-x-HARQ-RTT-TimerDL, di-x-HARQ-RTT-TimerUL, drx-RetransmissionTimerDL, and drx-RetransmissionTimerUL are defined. When the UE performs HARQ retransmission, the UE may be allowed to transition to the sleep mode during an RTT timer (drx-HARQ-RTT-TimerDL, drx-HARQ-RTT-TimerUL, etc.) or maintain the active state during a retransmission timer (drx-RetransmissionTimerDL, di-x-RetransmissionTimerUL, etc.)

In addition, for details of SL DRX, SL DRX-related contents of TS 38.321, TS 38.331 and R2-2111419 may be referred to as the related art.

Tables 10 to 13 below are related to the sidelink DRX disclosed in 3GPP TS 38.321 V16.2.1, and are used as the related art of the present disclosure.

[Table 10]

The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6].

NOTE 1: If Sidelink resource allocation mode 1 is configured by RRC, a DRX functionality is not configured.

RRC controls DRX operation by configuring the following parameters:

- *drx-onDurationTimer*: the duration at the beginning of a DRX cycle;

- *drx-SlotOffset*: the delay before starting the *drx-onDurationTimer*;

- *drx-InactivityTimer*: the duration after the PDCCH occasion in which a PDCCH indicates a new UL or DL transmission for the MAC entity;

- *drx-RetransmissionTimerDL* (per DL HARQ process except for the broadcast process): the maximum duration until a DL retransmission is received;

- *drx-RetransmissionTimerUL* (per UL HARQ process): the maximum duration until a grant for UL retransmission is received;

- *drx-LongCycleStartOffset*: the Long DRX cycle and *drx-StartOffset* which defines the subframe where the Long and Short DRX cycle starts;

- *drx-ShortCycle* (optional): the Short DRX cycle;

- *drx-ShortCycleTimer* (optional): the duration the UE shall follow the Short DRX cycle;

- *drx-HARQ-RTT-TimerDL* (per DL HARQ process except for the broadcast process): the minimum duration before a DL assignment for HARQ retransmission is expected by the MAC entity;

- *drx-HARQ-RTT-TimerUL* (per UL HARQ process): the minimum duration before a UL HARQ retransmission grant is expected by the MAC entity;

- *ps-Wakeup* (optional): the configuration to start associated *drx-onDurationTimer* in case DCP is monitored but not detected;

- *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started;

- *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started.

Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer*, *drx-InactivityTimer*. The DRX parameters that are common to the DRX groups are: *drx-SlotOffset*, *drx-RetransmissionTimerDL*, *drx-RetransmissionTimerUL*, *drx-LongCycleStartOffset*, *drx-ShortCycle* (optional), *drx-ShortCycleTimer* (optional), *drx-HARQ-RTT-TimerDL*, and *drx-HARQ-RTT-TimerUL*.

When a DRX cycle is configured, the Active Time for Serving Cells in a DRX group includes the time while:

- *drx-onDurationTimer* or *drx-InactivityTimer* configured for the DRX group is running; or

- *drx-RetransmissionTimerDL* or *drx-RetransmissionTimerUL* is running on any Serving Cell in the DRX group;

[Table 11]

or

- *ra-ContentionResolutionTimer* (as described in clause 5.1.5) or *msgB-ResponseWindow* (as described in clause 5.1.4a) is running; or

- a Scheduling Request is sent on PUCCH and is pending (as described in clause 5.4.4); or

- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

When DRX is configured, the MAC entity shall:

1> if a MAC PDU is received in a configured downlink assignment:

    2> start the *drx-HARQ-RTT-TimerDL* for the corresponding HARQ process in the first symbol after the end of the corresponding transmission carrying the DL HARQ feedback;

    2> stop the *drx-RetransmissionTimerDL* for the corresponding HARQ process.

1> if a MAC PDU is transmitted in a configured uplink grant and LBT failure indication is not received from lower layers:

    2> start the *drx-HARQ-RTT-TimerUL* for the corresponding HARQ process in the first symbol after the end of the first repetition of the corresponding PUSCH transmission;

    2> stop the *drx-RetransmissionTimerUL* for the corresponding HARQ process.

1> if a *drx-HARQ-RTT-TimerDL* expires:

    2> if the data of the corresponding HARQ process was not successfully decoded:

        3> start the *drx-RetransmissionTimerDL* for the corresponding HARQ process in the first symbol after the expiry of *drx-HARQ-RTT-TimerDL*.

1> if a *drx-HARQ-RTT-TimerUL* expires:

    2> start the *drx-RetransmissionTimerUL* for the corresponding HARQ process in the first symbol after the expiry of *drx-HARQ-RTT-TimerUL*.

1> if a DRX Command MAC CE or a Long DRX Command MAC CE is received:

    2> stop *drx-onDurationTimer* for each DRX group;

    2> stop *drx-InactivityTimer* for each DRX group.

1> if *drx-InactivityTimer* for a DRX group expires:

    2> if the Short DRX cycle is configured:

        3> start or restart *drx-ShortCycleTimer* for this DRX group in the first symbol after the expiry of *drx-InactivityTimer*;

        3> use the Short DRX cycle for this DRX group.

    2> else:

        3> use the Long DRX cycle for this DRX group.

1> if a DRX Command MAC CE is received:

    2> if the Short DRX cycle is configured:

        3> start or restart *drx-ShortCycleTimer* for each DRX group in the first symbol after the end of DRX Command MAC CE reception;

[Table 12]

> 3> use the Short DRX cycle for each DRX group.
>
> 2> else:
>> 3> use the Long DRX cycle for each DRX group.
>
> 1> if drx-ShortCycleTimer for a DRX group expires:
>> 2> use the Long DRX cycle for this DRX group.
>
> 1> if a Long DRX Command MAC CE is received:
>> 2> stop drx-ShortCycleTimer for each DRX group.
>> 2> use the Long DRX cycle for each DRX group.
>
> 1> if the Short DRX cycle is used for a DRX group, and [(SFN × 10) + subframe number] modulo (drx-ShortCycle) = (drx-StartOffset) modulo (drx-ShortCycle):
>> 2> start drx-onDurationTimer for this DRX group after drx-SlotOffset from the beginning of the subframe.
>
> 1> if the Long DRX cycle is used for a DRX group, and [(SFN × 10) + subframe number] modulo (drx-LongCycle) = drx-StartOffset:
>
>> 2> if DCP monitoring is configured for the active DL BWP as specified in TS 38.213 [6], clause 10.3:
>
>>> 3> if DCP indication associated with the current DRX cycle received from lower layer indicated to start drx-onDurationTimer, as specified in TS 38.213 [6]; or
>
>>> 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by recoverySearchSpaceId of the SpCell identified by the C-RNTI while the ra-ResponseWindow is running (as specified in clause 5.1.4); or
>
>>> 3> if ps-Wakeup is configured with value true and DCP indication associated with the current DRX cycle has not been received from lower layers:
>
>>>> 4> start drx-onDurationTimer after drx-SlotOffset from the beginning of the subframe.
>
>> 2> else:
>>> 3> start drx-onDurationTimer for this DRX group after drx-SlotOffset from the beginning of the subframe.
>
> NOTE 2: In case of unaligned SFN across carriers in a cell group, the SFN of the SpCell is used to calculate the DRX duration.
>
> 1> if a DRX group is in Active Time:
>
>> 2> monitor the PDCCH on the Serving Cells in this DRX group as specified in TS 38.213 [6];
>
>> 2> if the PDCCH indicates a DL transmission:
>
>>> 3> start the drx-HARQ-RTT-TimerDL for the corresponding HARQ process in the first symbol after the end of the corresponding transmission carrying the DL HARQ feedback;
>
> NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback.
>
>>> 3> stop the drx-RetransmissionTimerDL for the corresponding HARQ process.
>
>>> 3> if the PDSCH-to-HARQ_feedback timing indicate a non-numerical k1 value as specified in TS 38.213 [6]:
>
>>>> 4> start the drx-RetransmissionTimerDL in the first symbol after the PDSCH transmission for the corresponding HARQ process.
>
>> 2> if the PDCCH indicates a UL transmission:

[Table 13]

> 3> start the *drx-HARQ-RTT-TimerUL* for the corresponding HARQ process in the first symbol after the end of the first repetition of the corresponding PUSCH transmission;
>
> 3> stop the *drx-RetransmissionTimerUL* for the corresponding HARQ process.
>
> 2> if the PDCCH indicates a new transmission (DL or UL) on a Serving Cell in this DRX group:
>
> > 3> start or restart *drx-InactivityTimer* for this DRX group in the first symbol after the end of the PDCCH reception.
>
> 2> if a HARQ process receives downlink feedback information and acknowledgement is indicated:
>
> > 3> stop the *drx-RetransmissionTimerUL* for the corresponding HARQ process.
>
> 1> if DCP monitoring is configured for the active DL BWP as specified in TS 38.213 [6], clause 10.3; and
>
> 1> if the current symbol n occurs within *drx-onDurationTimer* duration; and
>
> 1> if *drx-onDurationTimer* associated with the current DRX cycle is not started as specified in this clause:
>
> > 2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:
> >
> > > 3> not transmit periodic SRS and semi-persistent SRS defined in TS 38.214 [7];
> > >
> > > 3> not report semi-persistent CSI configured on PUSCH;
> > >
> > > 3> if *ps-TransmitPeriodicL1-RSRP* is not configured with value *true*:
> > >
> > > > 4> not report periodic CSI that is L1-RSRP on PUCCH.
> > >
> > > 3> if *ps-TransmitOtherPeriodicCSI* is not configured with value *true*:
> > >
> > > > 4> not report periodic CSI that is not L1-RSRP on PUCCH.
>
> 1> else:
>
> > 2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause:
> >
> > > 3> not transmit periodic SRS and semi-persistent SRS defined in TS 38.214 [7] in this DRX group;
> > >
> > > 3> not report CSI on PUCCH and semi-persistent CSI configured on PUSCH in this DRX group.
> >
> > 2> if CSI masking (*csi-Mask*) is setup by upper layers:
> >
> > > 3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and
> > >
> > > > 4> not report CSI on PUCCH in this DRX group.

NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s).

Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected.

The MAC entity needs not to monitor the PDCCH if it is not a complete PDCCH occasion (e.g. the Active Time starts or ends in the middle of a PDCCH occasion).

When the remote UE is SL-connected to the relay UE for a relay operation, the relay UE delivers the SIB to the remote UE. Currently, there is a discussion on whether the remote UE needs to transmit the SIB even before the remote UE is SL-connected to the relay UE, and Table 14 below is part of TR 36.746 associated therewith.

[Table 14]

**5.1.2.3    System information reception for evolved ProSe Remote UE**

The evolved ProSe UE-to-Network Relay UE supports relaying of system information for the linked evolved ProSe Remote UEs located in-coverage of E-UTRAN coverage as well as out of E-UTRAN coverage. The eNB can configure the evolved ProSe UE-to-Network Relay UE whether it can forward the system information to linked in-coverage evolved ProSe Remote UEs. Alternatively the evolved ProSe UE-to-Network Relay UE is expected to forward the system information to the in-coverage evolved ProSe Remote UE. The linked evolved ProSe Remote UE utilizes the system information of the serving cell of the evolved ProSe UE-to-Network Relay UE.

Not all system information is relayed to the linked evolved ProSe Remote UE via the evolved ProSe UE-to-Network Relay UE. Essential SIBs are required to be relayed from the evolved ProSe UE-to-Network Relay UE to all linked evolved ProSe Remote UEs commonly. At least the following SIBs can be considered as essential SIBs: MIB (SFN, bandwidth), SIB1 (PLMN, cell information), SIB2 (Access Barring information), FeD2D SIB related info (e.g. SIB18/19 or new SIBs). Evolved ProSe UE-to-Network Relay UE can optionally forward other SIBs (e.g., SIB10/11/12/13/14/15) depending on the linked evolved ProSe Remote UEs.

> Editor's Note: It is FFS which other SIBs needs to be forwarded to the evolved ProSe Remote UE and what information is provided to the evolved ProSe UE-to-Network Relay UE to indicate which SIBs are needed by the evolved ProSe Remote UE.

The evolved ProSe UE-to-Network Relay UE is expected to purely forward the SIBs without changing the information and format of the SIB. This approach is recommended. Alternatively, the evolved ProSe UE-to-Network Relay UE can only forward a subset of information of the SIB to the evolved ProSe Remote UE.

> Editor's Note: It is FFS if there is a use-case for the evolved ProSe UE-to-Network Relay UE forwarding only subset of information of the SIB to the evolved ProSe Remote UE.

An evolved ProSe UE-to-Network Relay UE forwards SIB over sidelink using broadcast/multi-cast.

> Editor's Note: It is FFS if unicast transmission is used for evolved ProSe UE-to-Network Relay UE forwarding SIB.

The system information is not delivered periodically to the evolved ProSe Remote UE, but only when deemed necessary. The evolved ProSe UE-to-Network Relay UE can determine that SIB delivery is deemed necessary for the evolved ProSe Remote UE when system information is updated.

> Editor's Note: Other reasons for the evolved ProSe UE-to-Network Relay UE determining that SIB delivery is deemed necessary are left for WI phase.

Table 10 below is related to selection and reselection of a sidelink relay UE in 3GPP TS 36.331. The disclosure of Table 15 is used as the related art of the present disclosure, and the details needed with respect to the related art refer to 3GPP TS 36.331.

[Table 15]

### 5.10.11.4 Selection and reselection of sidelink relay UE

A UE capable of sidelink remote UE operation that is configured by upper layers to search for a sidelink relay UE shall:

1> if out of coverage on the frequency used for sidelink communication, as defined in TS 36.304 [4], clause 11.4; or

1> if the serving frequency is used for sidelink communication and the RSRP measurement of the cell on which the UE camps (RRC_IDLE)/ the PCell (RRC_CONNECTED) is below *threshHigh* within *remoteUE-Config* :

  2> search for candidate sidelink relay UEs, in accordance with TS 36.133 [16]

  2> when evaluating the one or more detected sidelink relay UEs, apply layer 3 filtering as specified in 5.5.3.2 across measurements that concern the same ProSe Relay UE ID and using the *filterCoefficient* in *SystemInformationBlockType19* (in coverage) or the preconfigured *filterCoefficient* as defined in 9.3 (out of coverage), before using the SD-RSRP measurement results;

NOTE 1: The details of the interaction with upper layers are up to UE implementation.

  2> if the UE does not have a selected sidelink relay UE:

    3> select a candidate sidelink relay UE which SD-RSRP exceeds *q-RxLevMin* included in either *reselectionInfoIC* (in coverage) or *reselectionInfoOoC* (out of coverage) by *minHyst*;

  2> else if SD-RSRP of the currently selected sidelink relay UE is below *q-RxLevMin* included in either *reselectionInfoIC* (in coverage) or *reselectionInfoOoC* (out of coverage); or if upper layers indicate not to use the currently selected sidelink relay: (i.e. sidelink relay UE reselection):

    3> select a candidate sidelink relay UE which SD-RSRP exceeds *q-RxLevMin* included in either *reselectionInfoIC* (in coverage) or *reselectionInfoOoC* (out of coverage) by *minHyst*;

  2> else if the UE did not detect any candidate sidelink relay UE which SD-RSRP exceeds *q-RxLevMin* included in either *reselectionInfoIC* (in coverage) or *reselectionInfoOoC* (out of coverage) by *minHyst*:

    3> consider no sidelink relay UE to be selected;

NOTE 2: The UE may perform sidelink relay UE reselection in a manner resulting in selection of the sidelink relay UE, amongst all candidate sidelink relay UEs meeting higher layer criteria, that has the best radio link quality. Further details, including interaction with upper layers, are up to UE implementation.

### 5.10.11.5 Sidelink remote UE threshold conditions

A UE capable of sidelink remote UE operation shall:

1> if the threshold conditions specified in this clause were not met:

  2> if *threshHigh* is not included in *remoteUE-Config* within *SystemInformationBlockType19*, or

  2> if *threshHigh* is included in *remoteUE-Config* within *SystemInformationBlockType19*, and the RSRP measurement of the PCell, or the cell on which the UE camps, is below *threshHigh* by *hystMax* (also included within *remoteUE-Config*):

    3> consider the threshold conditions to be met (entry);

1> else:

  2> if *threshHigh* is included in *remoteUE-Config* within *SystemInformationBlockType19*, and the RSRP measurement of the PCell, or the cell on which the UE camps, is above *threshHigh* (also included within *remoteUE-Config*):

    3> consider the threshold conditions not to be met (leave);

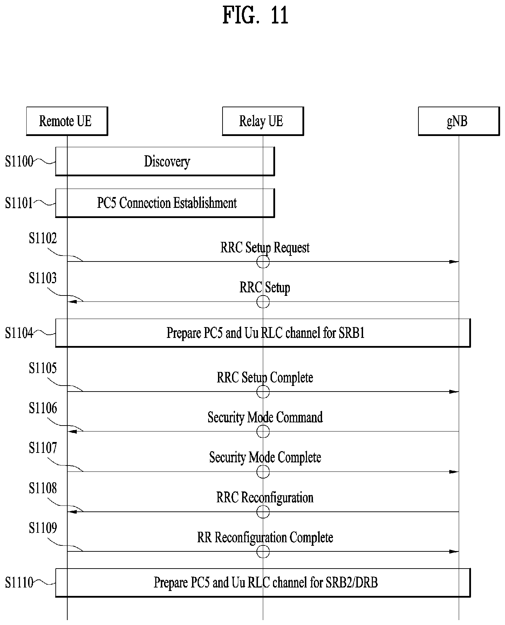

FIG. 11 illustrates connection management captured in TR document (3GPP TR 38.836) related to the Rel-17 NR SL and a procedure during path switching to indirect from direct. A remote UE needs to configure a PDU session/DRB thereof with a network before user plane data transmission.

A PC5 unicast link configuration procedure in terms of PC5-RRC of the Rel-16 NR V2X may be reused to establish a secure unicast link for L2 UE-to-Network relaying between the remote UE and a relay UE before the remote UE establishes Uu RRC connection with a network through the relay UE.

When the remote UE starts a first RRC message for connection establishment with a gNB for both in-coverage and out-of-coverage, the PC5 L2 configuration for transmission between the remote UE and the UE-to-network relay UE may be based on the RLC/MAC configuration defined in the standard. Establishment of Uu SRB1/SRB2 and DRB of the remote UE complies with a legacy Uu configuration procedure for the L2 UE-to-Network Relay.

A higher-level connection establishment procedure shown in FIG. 11 is applied to the L2 UE-to-Network Relay.

In operation S1100, the remote UE and the relay UE may perform a discovery procedure and may establish a PC5-RRC connection in operation S1101 based on an existing Rel-16 procedure.

In operation S1102, the remote UE may transmit a first RRC message (i.e., RRCSetupRequest) for connection establishment with the gNB through the relay UE using the basic L2 configuration of PC5. The gNB provides the RRCSetup message in response to the remote UE (S1103). Delivery of the RRCSetup to the remote UE may use the basic configuration of the PC5. When the relay UE is not started in RRC_CONNECTED, the relay UE needs to perform connection establishment thereof upon receiving a message for the basic L2 configuration of the PC5. In this operation, the details for the relay UE to deliver RRCSetupRequest/RRCSetup message for the remote UE may be discussed in the WI operation.

In operation S1104, the gNB and the Relay UE performs a relay channel establishment procedure through Uu. According to the configuration of the gNB, the relay/remote UE establishes an RLC channel for relaying SRB1 to the remote UE through PC5. The operation may prepare a relay channel for SRB1.

In operation S1105, the remote UE SRB1 message (e.g., RRCSetupComplete message) may be transmitted to the gNB through the relay UE using an SRB1 relay channel via the PC5. The remote UE may be RRC-connected via Uu.

In operation S1106, the remote UE and the gNB configures security according to a legacy procedure and receives a security message through the relay UE.

In operation S1110, the gNB configures an additional RLC channel between the gNB and the relay UE for traffic relay. According to the configuration of the gNB, the relay/remote UE configures an additional RLC channel between the remote UE and the relay UE for traffic relay. The gNB transmits RRCReconfiguration to the remote UE through the relay UE to configure the relay SRB2/DRB. The remote UE transmits RRCReconfigurationComplete in response to the gNB through the relay UE.

In case of L2 UE-to-Network relay in addition to connection establishment procedure:

- The RRC reconfiguration and RRC connection release procedure may reuse the legacy RRC procedure along with the message content/configuration design in the WI operation.
- The RRC connection reestablishment procedure and the RRC connection restart procedure may reuse the existing RRC procedure as a baseline by considering a connection establishment procedure of the L2 UE-to-network relay above to process a relay-specific portion along with the message content/configuration design. The message content/configuration may be defined later.

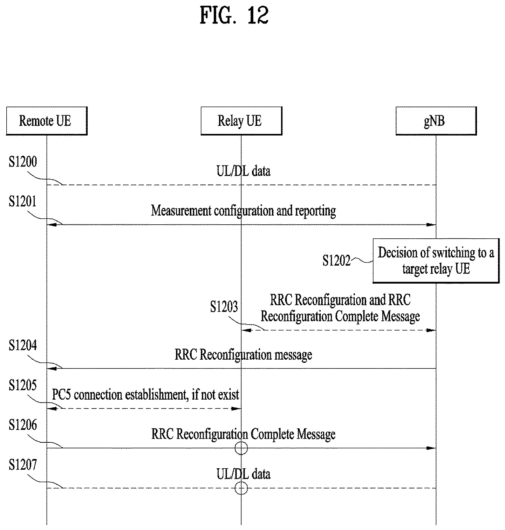

FIG. 12 illustrates an example of switching of a direct to indirect path. When the remote UE switches to an indirect relay UE for service continuity of the L2 UE-to-network relay, the procedure of FIG. 12 may be used.

Referring to FIG. 12, in operation S1201, the remote UE measures/discovers a candidate relay UE and then reports one or more candidate relay UEs. The remote UE may filter an appropriate relay UE that satisfies a higher layer reference during reporting. The reporting may include an ID and SL RSRP information of the relay UE, and in this case, details related to PC5 measurement may be determined later.

In operation S1202, the gNB determines to switch to a target relay UE and selectively transmits target (re)configuration to the relay UE.

In operation S1204, an RRC reconfiguration message for the remote UE may include an ID of the target relay UE, a target Uu, and a PC5 configuration.

In operation S1205, when connection is not yet configured, the remote UE may establish PC5 connection with the target relay UE.

In operation S1206, the remote UE feeds back RRCReconfigurationComplete to the gNB through a target path using the target configuration provided in RRCReconfiguration.

In operation S1207, a data path is switched.

As described above, when path switching is performed from direct to indirect to support service continuity, the gNB performs RRC reconfiguration to prepare for connection with the remote UE to the relay UE in operation S1202. Alternatively, S1202 may be located after S1204, but the remote UE needs to perform the RRCReconfiguration /RRCReconfigurationComplete procedure before transmitting the RRCReconfigurationComplete message for indirect connection to the gNB.

The RRCReconfigurationComplete message delivered to the target gNB by the remote UE may correspond to an initial message that is first transmitted to the gNB through the relay UE after the remote UE and the relay UE establish SL connection, and thus, may be delivered through a fixed/specified configuration (e.g., SRB0). In the above description, direct to indirect path switching is indicated by performing path switching in the same cell (intra gNB HO), but path switching may be allowed to another cell (inter gNB HO). In direct-to-indirect path switching, a subject that selects the relay UE may be a remote UE or a gNB. Regardless of who selected the relay UE, the target gNB needs to identify the relay UE. This is because the relay UE needs to be identified before the target gNB performs RRCReconfiguartion for a relay operation on the corresponding relay UE.

Accordingly, detailed descriptions related to a method of identifying the relay UE in direct-to-indirect path switching when the serving gNB of the remote UE and the gNB associated with the selected relay UE are different will be given. In the following description, the gNB to which the remote UE is directly connected may be referred to as a source gNB (or serving gNB), and the gNB to which the relay UE is directly connected may be referred to as a target gNB.

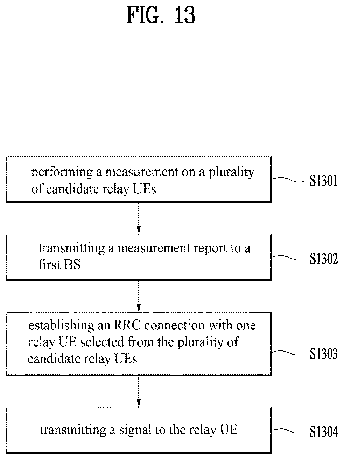

The remote UE according to an embodiment may perform measurement on a plurality of candidate relay UEs (S1301 of FIG. 13). The remote UE may transmit a measurement report to a first BS (source gNB) (S1302). After the remote UE establishes an RRC connection with one relay UE selected from the plurality of candidate relay UEs (S1303), the remote UE may transmit a signal to the relay UE (S1304).

Here, the remote UE may transmit ID information related to an RRC reconfiguration procedure between the relay UE and a second BS to the first BS. The ID information may be included in the measurement report, and the RRC reconfiguration procedure may be for the relay UE to operate as a relay of the remote UE. The ID information may be delivered from the first BS to the second BS (target gNB). In detail, a unique relay UE ID reported by the remote UE may be delivered to the target gNB through an interface (e.g. backhaul) of an NW terminal by a source gNB that determines a path switch/HO.

Through this, the second BS may check/identify/specify the selected one relay UE through the ID information, and may perform the RRC reconfiguration procedure with the relay UE.

In more detail, the relay UE may be selected by one of the remote UE or the first BS, and regardless of a selection subject of the relay UE, the second BS may not check/identify/specify the relay UE only in the existing procedure. In detail, in the case in which the first BS selects the relay UE, when the remote UE reports to a serving BS thereof whether a candidate relay UE ID(s), a SL-RSRP, and a candidate relay UE belong to any cell, the serving BS may select the most appropriate relay UE to determine whether the remote UE is in the path switch/HO. As described above, when the source gNB determines the path switch/HO, the target gNB needs to transmit/receive RRC Reconfiguration and RRC Reconfiguration complete messages to the relay UE selected by the source gNB (in terms of preparation for this), and thus it needs know who the corresponding relay UE is. The relay UE ID, which is currently reported by the remote UE to the source gNB, is estimated as a Layer 2 ID when the relay UE transmits a message such as Discovery/PC5-S/PC5-RRC to an ID generated in a higher layer of the relay UE. When the serving BS performs reporting to the serving BS using this value, the candidate relay UE maintains a certain RSRP with the remote UE and knows which cell the relay UE belongs, and thus the serving BS may select a suitable relay UE for the remote UE. However, even if the source gNB delivers the layer2 ID of the relay UE to the target gNB, the target gNB may not know which UE the corresponding relay UE is using the layer2 ID. This is because the Layer 2 ID is a value determined and used in the higher layer of the relay UE regardless of the gNB. Therefore, as described above, the unique ID allocated by the target gNB needs to be included in the measurement report reported by the remote UE to the source gNB. In this case, before the remote UE and the relay UE establish a PC5 connection with each other, the target gNB may transmit and receive the RRC Reconfiguration and RRC Reconfiguration complete messages to the relay UE.

In the same way, the remote UE selects a relay UE from among a plurality of candidate relay UEs. In detail, in the measurement and reporting operation, the remote UE reports the relay UE ID selected thereby, an SL-RSRP, and a cell ID to which the relay UE ID belongs. At this time, the relay UE ID reported by the remote UE is estimated to be the layer2 ID of the relay UE. This is because, when the remote UE and the relay UE establish a typical PC5 connection, information identifying each other is layer2 ID. However, as described above, the target gNB may not know which relay UE the target gNB refers to using only the Layer 2 ID reported by the relay UE. This is because layer2 ID is a value that is changeable according to a link/service or the like for the same UE.

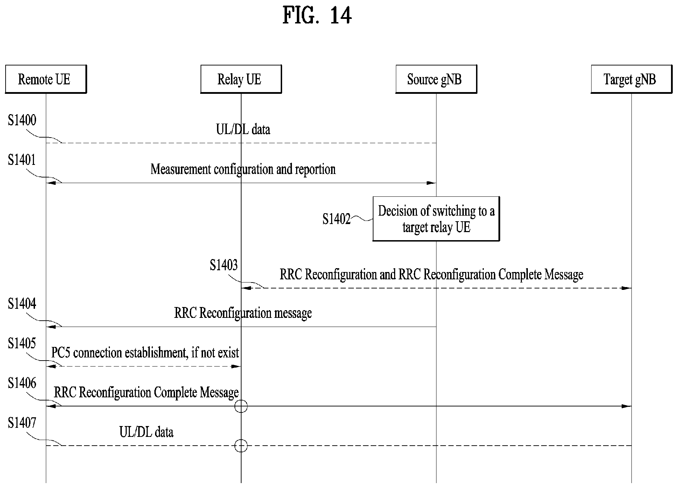

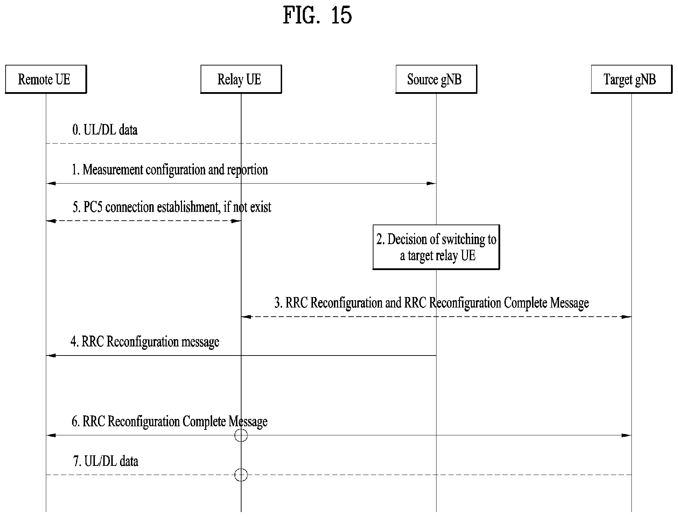

The ID information may be a layer2 ID allocated to the relay UE by the second BS. The layer 2 ID may be included in a discovery message and a PC5 RRC message that are transmitted by the relay UE. Alternatively, the ID information may be a local ID allocated to the relay UE separately from the layer 2 ID by the second BS. The ID information will be described in detail below with reference to FIGS. 14 and 15.

FIG. 14 illustrates a procedure in which the source gNB and the target gNB are not the same as an inter-gNB HO operation. When the BS selects the relay UE for path switch (HO) for the remote UE and/(or) after the BS performs the RRCReconfiguartion operation for a relay operation to the relay UE, the remote UE and the relay UE may establish a PC5 connection.

Referring to FIG. 14, the remote UE may transmit and receive UL DL/DL data to/from a source gNB (S1400). The remote UE may perform measurement on candidate relay UEs and report the measurement result to the source gNB (S1401). The source gNB may determine to switch the remote UE to the target relay UE based on this report (S142). Here, the target relay UE is connected to the target gNB, and thus transmission and reception of the RRC reconfiguration and RRC reconfiguration messages need to be performed between the relay UE and the target gNB. However, as described above, the target gNB and the relay UE may not be specified using only the reporting of the remote UE.

Therefore, as described above, the remote UE may transmit ID information related to an RRC reconfiguration procedure between the relay UE and the target gNB to the source gNB such that the target gNB identifies/checks/specifies the relay UE, and then performs an RRC reconfiguration procedure between the relay UE and the target gNB (S1403).

As a specific example related to the ID information, the target gNB may allocate the layer2 ID to the relay UE as a value that does not overlap in a cell thereof. The relay UE may use the value as its own SRC ID (source ID) when transmitting the discovery/PC5-S/PC5-RRC. When the remote UE reports the measurement value to the source gNB using the value, the source gNB may report the relay UE that determines the path switch/HO to the target gNB, and the target gNB may know which UE the corresponding relay UE is.

Alternatively, the target gNB may allocate a unique local ID to the relay UE. This local value needs to be allocated as a unique value that does not overlap with other relay UEs within a target gNB range. In this case, the relay UE may transmit the local ID received from the target gNB in the discovery/PC5-S/PC5-RRC message when transmitting the message. That is, the layer2 ID allocated by the higher layer is used as it is and additionally includes a local ID. In this case, as described above, when the remote UE reports a measurement value to a serving BS thereof, the remote UE may report the layer 2 ID and the local ID together, or may report only the local ID in some cases. The source gNB that determines Path switch/HO may notify the target gNB of the local ID value, and the target gNB may know which relay UE is selected through the local ID value, and thus may transmit/receive RRC Reconfiguration and RRC Reconfiguration complete messages to/from the corresponding relay UE.

Alternatively, when the relay UE is in the RRC CONNECTED state, the relay UE may report the layer2 SRC ID used in the discovery message to the BS. A time point at which the relay UE reports a layer2 SRC ID used in the discovery message to the BS may be a time point at which the relay UE transmits a discovery message first after the RRC CONNECTED state. At this time, the relay UE may report its own (discovery message) SRC ID through sidelink UE information (SUI). The remote UE reports the layer2 SRC ID of the candidate relay UE to the source gNB, and the source gNB selects a relay UE suitable for path switch/HO among the layer2 SRC IDs of the candidate relay UE reported by the remote UE, and informs the remote UE of the selected relay UE. The layer2 (SRC) ID of the selected relay UE may be included in the RRC Reconfiguration message transmitted to the remote UE. The BS may directly recognize the remote UE selected as a target of path switch/HO to the remote UE. This is because, since the candidate relay UEs already report the layer2 SRC ID used in the discovery message to the BS, the BS knows the C-RNTI of the relay UE selected by the BS. That is, the BS may perform RRC reconfiguration necessary for the corresponding relay UE by matching the layer2 SRC ID of the relay UE with the C-RNTI.

When the relay UE is in the RRC IDLE IDLE/INACTIVE state, a time point of reporting an SRC ID used in the discovery message by the relay UE to the gNB may also be changed. In this case, the relay UE establishes a PC5-S/RRC connection with the remote UE, and then switches to the RRC-CONNECTED IDLE state, or after the RRC_CONNECTED IDLE state is performed (e.g. after transmitting the RRCSetupComplete message, the SRC ID used in the discovery message may be reported to the BS (through the SUI).

FIG. 15 illustrates an HO procedure in which, when a remote UE selects a relay UE or after a remote UE and a relay UE establish a PC5 connection, a BS performs a relay operation for a relay operation to the relay UE. In FIG. 15, unlike the case of FIG. 14, the remote UE selects the relay UE, and thus the PC5 connection establishment procedure of the remote UE and the relay UE may be performed before transmission and reception of the RRC reconfiguration and the RRC reconfiguration message are performed between the relay UE and the target gNB. In this case, as described above, the target gNB is difficult to identify/check/specify the relay UE, and thus the following method may be used.

When the source gNB of the remote UE determines the path switch/HO, the source gNB may notify the corresponding relay UE ID using an ID that the target gNB is capable of identifying. That is, when the layer2 SRC ID of the relay UE used in the Discovery/PC5-S/PC5-RRC message by the relay UE is used as a unique value allocated by the target gNB, and the remote UE reports the measurement value, if the unique value reported by the target gNB is reported to the source gNB, the source gNB may report the unique value to the target gNB. In this case, the target gNB is a unique value allocated by the relay UE to the relay UE, and thus the target gNB may transmit/receive RRC Reconfiguration and RRC Reconfiguration Completes to/from the corresponding relay UE.

The target gNB may allocate, to the relay UE, a layer 2 ID to be used by the relay UE as an SRC ID of the Discovery/PC5-S/PC5-RRC message by the relay UE. Alternatively, the existing layer2 ID is a value determined in a higher layer of the relay UE, and thus an additional local ID may be allocated in addition to the layer2 ID. In this case, the relay UE may transmit the layer 2 ID allocated in the higher layer of the relay UE and the local ID value allocated from the BS of the relay UE in the Discovery/PC5-S/PC5-RRC message.

In this case, when the relay UE is a UE in an INACTIVE/IDLE state, the UE may establish a connection with the gNB and request a unique ID for a relay operation to the gNB while establishing a PC5 connection with the remote UE. In this case, temporally, when a unique ID is allocated from the gNB after establishing a PC5 connection with the remote UE, the remote UE may transmit the unique ID received from the BS as additional information.

Alternatively, after establishing a PC5 connection with the relay UE, the remote UE may require a unique ID (e.g. local ID, C-RNTI, reinforced on September 9, 2021: 5G-S-TMSI, I-RNTI) received from the BS to the relay UE to report a measurement value to a serving BS along with the ID of the relay UE of which connection is made. The remote UE reports the unique ID received from the relay UE together with the measurement report.

The unique relay UE ID reported by the remote UE may be transmitted to the target gNB through, for example, an interface of an NW terminal by the source gNB that determines path switch/HO. Accordingly, the target gNB may know on which relay UE a Reconfiguration and RRC Reconfiguration Complete procedure needs to be performed to prepare path switch/HO.

As another example, in an operation in which the relay UE configures the PC5 connection establishment, the relay UE may notify the relay UE of the connection with the relay UE for path switch/HO (in the connection operation). (Alternatively, in the operation in which the remote UE configures the PC5 connection establishment with the relay UE, the remote UE may notify the relay UE of the connection with the relay UE for path switch/HO (in the connection operation).)

The relay UE that receives the message may transmit/receive RRC Reconfiguration and RRC Reconfiguration Complete messages for preparing a connection between the target gNB and the remote UE. However, there is a problem in that this operation is performed before the source gNB determines the path switch/HO. For example, when the source gNB of the remote UE does not permit the path switch/HO after the relay UE finishes RRC establishment for connection with the remote UE, the relay UE may have a result of performing an unnecessary operation in advance.

Even if the same relay UE transmits the SRC ID (layer2 ID) used in the discovery message and the SRC ID (layer2 ID) used for communication, the transmitted IDs may have different values. Therefore, it may be necessary to report a linkage value between the SRC ID (layer2 ID) used in the discovery message and the SRC ID (layer2 ID) used for communication to the BS. In this case, when the remote UE establishes an SL connection with the relay UE and reports the C-RNTI to the BS, the BS may not know which SRC (layer 2) ID (discovery message/communication message) is previously reported. Therefore, the remote UE may report linkage information of the C-RNTI of the relay UE and the SRC (layer 2) ID (for the discovery message/communication message) to the BS.

Alternatively, when the relay UE is in a connected state with the gNB and reports the SRC (layer 2) ID (for the discovery message/communication message) used by the relay UE to the BS, the BS may notify the remote UE of a mapping relationship between the C-RNTI of the relay UE and the SRC (layer 2) ID used by the relay ID. That is, when the BS compares the SRC (layer 2) ID of the candidate relay UE reported by the remote UE with the SRC (layer 2) ID used by the relay UE, the BS may know what C-RNTI the relay UE reported by the remote UE has. Therefore, the BS may directly inform the C-RNTI value of the relay UE on the remote UE based on the corresponding information. The C-RNTI value of the relay UE may be included in the RRC reconfiguration message. In addition, information on SRC (layer 2) ID (for discovery message/communication message) may be known to the BS, and thus the BS may know the relationship between the L2 ID of the remote UE and the C-RNTI of the remote UE.

Alternatively, the relay UE may inform the BS of SRC ID (for discovery (and/or) communication) used by the relay UE in connection with the gNB. In this case, the BS may distinguish which relay UE is indicated by the SRC commit ID report reported by the remote UE. For example, when the remote UE performs measurement and reporting for a path switch (HO) to the BS, the remote UE may report the SRC ID (layer-2 ID) of the candidate relay UE to a serving BS thereof through the direct link together with the SL/SD-RSRP. Accordingly, the BS selects an appropriate relay UE suitable for path switch/HO and transmits the selected relay UE to the remote UE. The remote UE establishes an SL connection with the relay UE indicated by the BS, and the relay UE reports SRC (layer2) ID (or the SRC (layer2) ID of communication message) of the discovery message used for connection with the remote UE by the relay UE to the BS. Through this, the BS may know that the corresponding relay UE is the relay UE selected by the BS. Alternatively, even before the remote UE establishes an SL connection with the relay UE indicated by the BS, the relay UE may report an SRC layer ID of the discovery message used by the relay UE to the BS. Through this value, the BS may perform configuration necessary for a relay operation in advance on the corresponding relay UE.

When the remote UE performs measurement and report, not only the ID of the candidate relay UE (the relay UE establishing the SL connection) but also the SRC ID (layer 2 ID) (used in transmission of the discovery/communication data) of the remote UE need to be reported together to the BS. This is to allow the BS to track a certain remote UE even after indirectly/directly path switch (HO) of the remote UE.

With respect to the above-described embodiment, a remote UE may include at least one processor, and at least one computer memory operatively connected to the at least one processor and configured to store instructions that when executed causes the at least one processor to perform operations, and in this case, the operations may include performing a measurement on a plurality of candidate relay UEs, transmitting a measurement report to a first BS, establishing an RRC connection with one relay UE selected from the plurality of candidate relay UEs, and transmitting a signal to the relay UE, and the remote UE may transmit ID information related to an RRC reconfiguration procedure between the relay UE and a second BS to the first BS.

In a processor to perform operations for a relay UE, the operations may include performing a measurement on a plurality of candidate relay UEs, transmitting a measurement report to a first BS, establishing an RRC connection with one relay UE selected from the plurality of candidate relay UEs, and transmitting a signal to the relay UE, and the remote UE may transmit ID information related to an RRC reconfiguration procedure between the relay UE and a second BS

to the first BS.

In a non-volatile computer-readable storage medium storing at least one computer program that includes instructions that, when executed by at least one processor, causes the at least one processor to perform operations for a relay UE, the operations may include performing a measurement on a plurality of candidate relay UEs, transmitting a measurement report to a first BS, establishing an RRC connection with one relay UE selected from the plurality of candidate relay UEs, and transmitting a signal to the relay UE, and the remote UE may transmit ID information related to an RRC reconfiguration procedure between the relay UE and a second BS to the first BS.

With respect to the above-described embodiment, an operation method of a first BS related to handover of a remote UE may include receiving a measurement report for a plurality of candidate relay UEs from a remote UE, by the first BS, and receiving a signal from the remote UE by the first BS, through one relay UE selected from among the plurality of candidate relay UEs in which an RRC connection with the remote UE is established, and in this case, the first BS may receive ID information related to an RRC reconfiguration procedure between the relay UE and the second BS from the remote UE.

A first BS may include at least one processor, and at least one computer memory operatively connected to the at least one processor and configured to store instructions that when executed causes the at least one processor to perform operations, and in this case, the operations may include receiving a measurement report for a plurality of candidate relay UEs from a remote UE, and receiving a signal from the remote UE, through one relay UE selected from among the plurality of candidate relay UEs in which an RRC connection with the remote UE is established, and in this case, the first BS may receive ID information related to an RRC reconfiguration procedure between the relay UE and the second BS from the remote UE.

With regard to a cause value of a relay UE in the 3GPP RAN2 Rel-17 SL Relay 114e conference, the agreement 'RAN2 to send a LS to SA2/CT1 to ask their view on whether a new or existing establishment/resume cause value is used for relay UE when relay UE enters RRC_CONNECTED only for relaying purpose' is derived. In the current 3GPP TS 38.331, emergency, highPriorityAccess, mt-Access, mo-Signalling, mo-Data, mo-VoiceCall, mo-VideoCall, mo-SMS, and mps-PriorityAccess, mcs-PriorityAccess are defined as the cause value delivered to the BS during the RRC setup request.

In this regard, the remote UE may communicate with the BS through the relay UE, and when the remote UE performs path switching from the indirect path to the direct path through the relay UE, the remote UE may receive the service continuity according to the HO procedure. However, due to the mobility, when the connection with the relay UE is suddenly disconnected without the HO commit procedure or RLF occurs between the remote UEs, the remote UE may reselect the relay UE or establish a connection with a Uu direct link. In this case, according to the current specification, the remote UE attempting to perform connection with the Uu direct link transmits the RRCSetupRequest message to the BS, and in this case, it is expected that the remote UE transmits the message in the cause value.

The cause value included in the RRCSetupRequest message transmitted for Uu link CONNECTION to a serving BS of the remote UE without a HO procedure by the remote UE in a CONNECTED state through the relay UE and the cause value included in the RRCSetupRequest message transmitted for Uu link CONNECTION by a general UE may be distinguished. When the remote UE in the CONNECTED state attempts the Uu link connection to the serving BS of the remote UE through the relay UE without the HO procedure, it may be notified that the remote UE is a remote UE through the Causevalue and is connected to the corresponding BS through the relay UE. The serving BS receiving this has a high possibility of maintaining a context for the corresponding remote UE, and thus it may be possible to maintain a degree of service continuity even if the serving BS does not undergo a normal HO procedure. Therefore, in the case of a remote UE, unlike the existing Causevalue, additional CauseValue may be defined, and a condition in which additional CauseValue may be used may be defined as follows.

New CauseValue for remote UE: Cause value for notifying that it is a remote UE that maintains an RRC Connected(/Inactive) state through a relay UE.

Conditions in which the new CauseValue is to be used

When RLF occurs in SL connection with a relay UE (when SL connection with a relay UE is suddenly disconnected) (and) When a remote UE attempts a Uu direct connection to a serving BS communicating through a relay UE

The 113bis agreement of the 3GPP RAN2 Rel-17 NR SL Relay determines 'When relay performs HO to another gNB, relay UE may send a PC5-S message (similar to LTE) to its connected remote UE(s) and this message may trigger relay reselection. FFS other indication/message can also be used'. That is, when the relay UE performs HO, the relay UE informs the remote UE connected thereto that the relay UE performs HO, and the remote UE ('may') trigger relay reselection. That is, unlike the previous group HO, when the relay UE performs HO differently from the previous group HO, the remote UE may not perform the HO, but the remote UE may find a new relay UE.

The present disclosure proposes a procedure and signaling when it is assumed that the remote UE may perform HO or select a new relay UE along the relay UE when the relay UE performs HO.

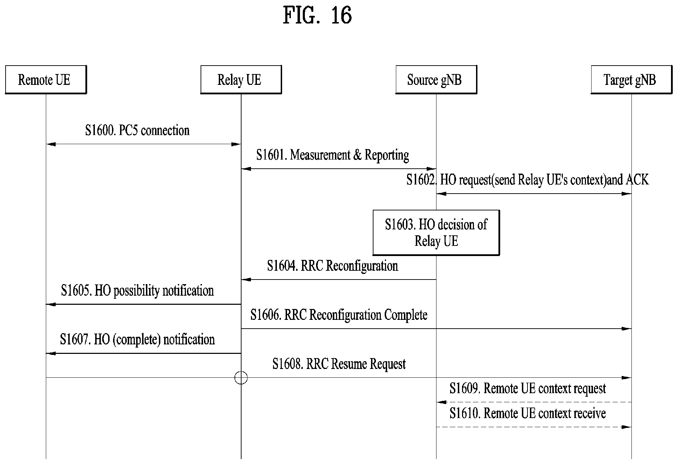

FIG. 16 illustrates a handover (HO) procedure of a relay UE according to an embodiment of the present disclosure.

Referring to FIG. 16, in operation S1600, the remote UE and the relay UE are in a state in which a PC5 connection is established. The service continuity may be considered only in the CONNECTED state. However, when the relay UE performs HO, the remote UE does not necessarily need to be in RRC-CONNECTED state. Due to HO of the relay UE, only when only the relay UE is in the RRC-CONNECTED state, only the relay UE may be considered.

In operation S1601, the relay UE may perform measurement and reporting as serving cell thereof according to the RRC configuration.

In operation S1602, the service gNB may determine HO according to the measurement and report result. The serving gNB that determines the HO performs an operation of checking whether HO is possible to the target gNB. In this case, the serving gNB may transmit the context of the relay UE to the target gNB, and may determine the final HO only when the target gNB allows the HO (transmission of ACK message).

When the serving gNB of the relay UE transmits the context of the relay UE to the target gNB, the serving gNB of the relay UE may transmit the context of the remote UE connected to the relay UE together. Even if the HO of the remote UE does not perform measurement and reporting, and it is not determined whether or not the remote UE is to perform HO on the same target gNB as the relay UE, the serving gNB may transmit together the context of the remote UE to the target gNB. This is to ensure service continuity when the remote UE does not select another relay UE after the remote UE knows whether or not the relay UE is HO and is attached to the same relay UE.

Alternatively, even after delivering context for the relay UE to the target gNB, the serving gNB needs to maintain a context of the remote UE connected to the relay UE, the local/temporal ID of the remote UE, and a mapping relationship between the local/temporal ID of the remote UE and an actual ID (e.g., C-RNTI) of the remote ID for a predetermined time. This is because, when the target gNB later requests the context of a remote UE connected to the relay UE, the target gNB needs to deliver the context. When the context of the remote UE connected to the relay UE, the local/temporal ID of the remote UE, and the mapping relationship between the local/temporal ID of the remote UE and an actual ID (e.g., C-RNTI) of the remote ID, which are stored in the serving gNB, are removed after the context of the relay UE is delivered to the target gNB, there is a problem in that a service continuity of the remote UE may be problematic when the remote UE transmits the RRCResumeRequest message through the relay UE that completes HO (operation S1608).

In operation S1603, the serving gNB that receives the HO from the target gNB may determine HO.

In operation S1604, the serving gNB that determines HO of the relay UE may notify the relay UE that HO is performed and (re)configures a value required to access the target gNB by RRC.

In operation S1605, the relay UE that receives the RRC (re)configuration for HO informs the remote UE that the relay UE performs HO (the relay UE receives HO-related RRC (re)configuration message). In this case, the relay UE may transmit the message including a cell ID of a new target cell on which HO is to be performed.

The remote UE receiving the message may be ready to perform or actually perform a relay reselection/path switch (direct connection to its serving/neighboring cell). Alternatively, HO may be determined to be performed on a target cell such as a relay UE. Alternatively, the current relay UE may be continuously attached.

However, the remote UE that receives the 'HO possibility notification' message indicating that the relay UE performs HO from the relay UE needs to suspend data transmitted from a point of time when the message is received through the relay UE.

In operation S1606, the relay UE transmits the RRCReconfigurationComplete message to the target gNB to the UE. Accordingly, HO is completed.

In operation S1607, the relay UE that transmits the RRCReconfigurationComplete message to the target gNB may transmit the 'HO complete notification' message indicating that HO is completed, to the remote UE connected to the relay UE. The corresponding message may be considered as a resume message. The remote UE that receives the 'HO complete notification' message may release the data suspend and may transmit data to the target gNB through the relay UE. Alternatively, the remote UE may trigger relay re-selection.

In operation S1608, the remote UE, which is informed of completion of HO of the relay UE (through the 'HO complete notification' message), may resume data transmission through the relay UE. When the remote UE continues to communicate with the gNB through the current relay UE, the remote UE may transmit the 'RRCResumeRequest' message or the message for RRC re-establish through the relay UE. In operation 1, when the context of the remote UE is brought to the target gNB, if the context of the relay UE is brought from the serving gNB to the target gNB, the service continuity of the remote UE may also be maintained.

In operations S1609 and S1610, when the context of the remote UE is not brought to the target gNB along with the context of the relay UE in operation S1601, the target gNB may require the context of the remote UE for the service continuity. In this case, the target gNB may require a context of the remote UE to the serving gNB and fetch the context.

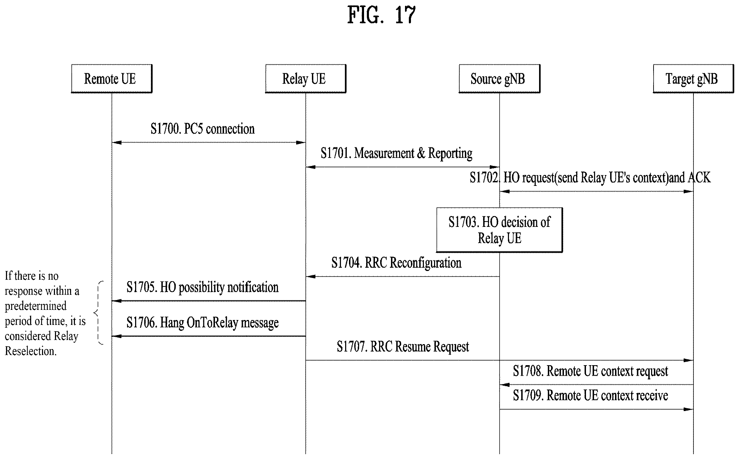

When the relay UE performs the HO operation, the remote UE may determine whether the remote UE is currently attached to the relay UE, determine whether to find a new relay UE or a direct path, and notify the remote UE of the determination, as shown in FIG. 17.

Operations S1701 to S1704 are the same as operations S1601 to S1604 of FIG. 16.

In operation S1705, the relay UE receiving RRCReconfiguration required to access the target gNB from the serving gNB may notify the remote UE that the relay UE performs HO ("HO possibility notification" message). In this case, the relay UE may also transmit the message including a cell ID of a new target cell on which HO is to be performed. The remote UE receiving the signal may not transmit any data transmitted through the relay UE any more but needs to suspend.

In operation S1706, the remote UE that knows that the relay UE is scheduled to perform HO through operation S1705 may determine whether the remote UE continues to connect the relay UE to the relay UE of the remote UE, searches for another relay UE, or searches for a direct path. The remote UE that wants to continue a connection with the current relay UE (or the remote UE intending to the UE-to-NW even after the relay UE performs HO through the current relay UE) may inform the relay UE that the relay UE is currently scheduled to maintain the connection with the relay UE ('KeepHangOnToRelay' message). A section in which the message is to be transmitted may be limited within a predetermined time range from after receiving a 'HO possibility notification' message from the relay UE. When there is no 'KeepHnagOnToRelay' message from the remote UE at the remote UE within a given time, the relay UE may consider that the current remote UE no longer maintains connection after HO. When it is considered that the remote UE no longer maintains connection after HO, the related PC5 connection may be released, or this may be reported to a new target gNB such that the gNB may refer to the new RRC reconfiguration. In this case, the 'KeepHnagOnToRelay' message may be configured such that the relay UE transmits RRCReconfigurationComplete to the target gNB to the relay UE before transmitting the RRCReconfigurationComplete to the target gNB. Alternatively, when a timer configured to receive a 'KeepHnagOnToRelay' message expires, RRCReconfigurationComplete may have to be transmitted to the target gNB.

In operation S1707, when the relay UE transmits the 'RRCReconfigurationComplete' message to the target gNB, HO is completed. When the relay UE receiving the 'KeepHnagOnToRelay' message from the remote UE transmits the 'RRCReconfigurationComplete' message to the target gNB, an ID of the remote UE may be transmitted together. In this case, the transmitted remote UE ID may be a local ID or temporal ID configured by the relay UE/gNB.

In operations S1708 to 9, the target gNB may receive the RRCReconfigurationComplete message from the relay UE and the target gNB that checks that an ID of the remote UE is included in the corresponding message may request the context of the corresponding remote UE to the serving gNB of the relay UE. In this case, the serving gNB may request the context to the serving gNB using the remote UE ID included in the RRCReconfigurationComplete message. The serving gNB that receives the message delivers the context for the associated remote UE to the target gNB.

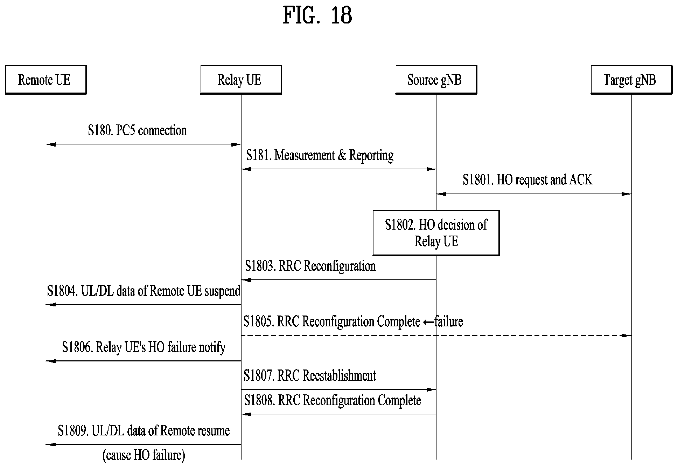

FIG. 18 illustrates a related procedure when the relay UE fails HO. In operation S1806 of FIG. 18, when the relay UE fails in HO, the relay UE may notify the relay UE that the relay UE fails. At this time, a cause value may also be transmitted. The remote UE receiving the message indicating that HO fails from the relay UE may perform relay re-selection or maintain a current connection. This may be due to implementation of the relay UE.

Then, in operation S1809, when the relay UE failing in HO completes RRC reestablishment with the previous serving cell/other cell, the relay UE may transmit a message notifying the remote UE of UL/DL data transmission/reception resume. The remote UE receiving the message may transmit/receive UL/DL data back through the serving cell of the relay UE (including a control message). If there is no operation 6, the HO failure cause value may be transmitted with the resume message.

When the relay UE performs HO, the relay UE may not allow transmission of a discovery message. When the relay UE transmits the discovery message while HO is performed, the cell ID included in the discovery message is the cell ID of the serving gNB while the relay UE performs the HO, but is the cell ID of the target gNB after HO, and thus a remote UE that is satisfied with service continuity and performs path switch may not meet the service continuity.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 13 illustrates a communication system 1 applied to the present disclosure.

Referring to FIG. 13, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle,

**EP 4 373 157 A1**

and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

FIG. 14 illustrates wireless devices applicable to the present disclosure.
Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.
The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.
The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

FIG. 15 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

FIG. 16 illustrates a vehicle applied to the present disclosure. The vehicle may be implemented as a transport means, an aerial vehicle, a ship, etc.

Referring to FIG. 16, a vehicle 100 may include a communication unit 110, a control unit 120, a memory unit 130, an I/O unit 140a, and a positioning unit 140b.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

FIG. 17 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 17, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

FIG. 18 illustrates a robot applied to the present disclosure. The robot may be categorized into an industrial robot, a medical robot, a household robot, a military robot, etc., according to a used purpose or field.

Referring to FIG. 18, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 14, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

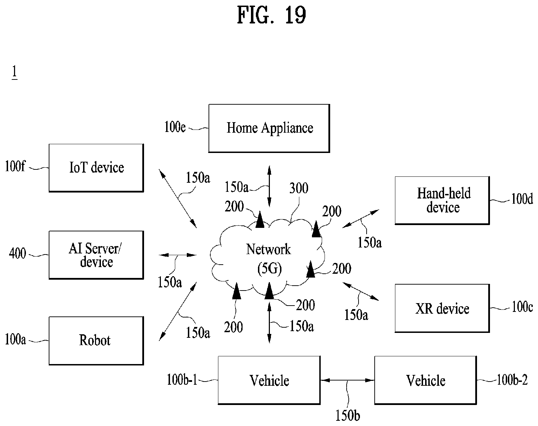

FIG. 19 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 19, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 14, respectively.

The communication unit 110 may transmit and receive wired/radio signals (e.g., sensor information, user input, learning models, or control signals) to and from external devices such as other AI devices (e.g., 100x, 200, or 400 of FIG. 13) or an AI server (e.g., 400 of FIG. 13) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 13). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 13). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

**INDUSTRIAL APPLICABILITY**

The above-described embodiments of the present disclosure are applicable to various mobile communication systems.

**Claims**

1. An operation method related to handover of a remote user equipment (UE) in a wireless communication system, the method comprising:

    performing a measurement on a plurality of candidate relay UEs, by the remote UE;
    transmitting a measurement report to a first base station (BS), by the remote UE;
    establishing an RRC connection with one relay UE selected from the plurality of candidate relay UEs, by the remote UE; and
    transmitting a signal to the relay UE, by the remote UE,
    wherein the remote UE transmits ID information related to an RRC reconfiguration procedure between the relay UE and a second BS to the first BS.

2. The method of claim 1, wherein the ID information is delivered to the second BS from the first BS.

3. The method of claim 1, wherein the RRC reconfiguration procedure is for the relay UE to operate as a relay of the remote UE.

4. The method of claim 1, wherein the ID information is included in the measurement report.

5. The method of claim 1, wherein the ID information is a layer2 ID allocated to the relay UE by the second BS.

6. The method of claim 5, wherein the layer2 ID is included in a discovery message and a PC5 RRC message that are transmitted by the relay UE.

7. The method of claim 1, wherein the ID information is a local ID allocated separately from a layer2 ID to the relay UE by the second BS.

8. The method of claim 1, wherein the first BS determines path switching to the relay UE of the remote UE.

9. The method of claim 1, wherein the relay UE is selected by one of the remote UE or the first BS.

10. A remote user equipment (UE) in a wireless communication system, the remote UE comprising:

    at least one processor; and
    at least one computer memory operatively connected to the at least one processor and configured to store instructions that when executed causes the at least one processor to perform operations including:

    performing a measurement on a plurality of candidate relay UEs;
    transmitting a measurement report to a first base station (BS);
    establishing an RRC connection with one relay UE selected from the plurality of candidate relay UEs; and
    transmitting a signal to the relay UE,
    wherein the remote UE transmits ID information related to an RRC reconfiguration procedure between the relay UE and a second BS to the first BS.

11. The remote UE of claim 10, wherein the remote UE communicates with at least one of another UE, a UE related to an autonomous driving vehicle, a base station (BS), or a network.

12. A processor for performing operations for a relay user equipment (UE) in a wireless communication system, the operations comprising:

    performing a measurement on a plurality of candidate relay UEs;
    transmitting a measurement report to a first base station (BS);
    establishing an RRC connection with one relay UE selected from the plurality of candidate relay UEs; and
    transmitting a signal to the relay UE,
    wherein the remote UE transmits ID information related to an RRC reconfiguration procedure between the relay UE and a second BS to the first BS.

13. A non-volatile computer-readable storage medium storing at least one computer program that includes instructions that, when executed by at least one processor, causes the at least one processor to perform operations for a relay user equipment (UE), the operations including:

    performing a measurement on a plurality of candidate relay UEs;
    transmitting a measurement report to a first base station (BS);
    establishing an RRC connection with one relay UE selected from the plurality of candidate relay UEs; and
    transmitting a signal to the relay UE,
    wherein the remote UE transmits ID information related to an RRC reconfiguration procedure between the relay UE and a second BS to the first BS.

14. An operation method of a first base station (BS) related to handover of a remote user equipment (UE) in a wireless communication system, the method comprising:

    receiving a measurement report for a plurality of candidate relay UEs from a remote UE by the first BS; and
    receiving a signal from the remote UE by the first BS, through one relay UE selected from among the plurality of candidate relay UEs in which an RRC connection with the remote UE is established, by the first BS,
    wherein the remote UE transmits ID information related to an RRC reconfiguration procedure between the relay UE and a second BS, to the first BS.

15. A first base station (BS) in a wireless communication system, the first BS comprising:

    at least one processor; and
    at least one computer memory operatively connected to the at least one processor and configured to store instructions that when executed causes the at least one processor to perform operations including:

       receiving a measurement report for a plurality of candidate relay UEs from a remote UE; and
       receiving a signal from the remote UE, through one relay UE selected from among the plurality of candidate relay UEs in which an RRC connection with the remote UE is established,
       wherein the first BS receives ID information related to an RRC reconfiguration procedure between the relay UE and a second BS, from the remote UE.

FIG. 1

# FIG. 2

# FIG. 3

UE | eNB

| UE | | eNB |
|----|---|-----|
| PDCP | ↔ | PDCP |
| RLC | ↔ | RLC |
| MAC | ↔ | MAC |
| PHY | → | PHY |

(a)

| UE | | eNB | | MME |
|----|---|-----|---|-----|
| NAS | ← | | → | NAS |
| RRC | ↔ | RRC | | |
| PDCP | ↔ | PDCP | | |
| RLC | ↔ | RLC | | |
| MAC | ↔ | MAC | | |
| PHY | → | PHY | | |

(b)

# FIG. 4

# FIG. 5

**gNB**

- Inter-Cell RRM
- RB Control
- Connection Mobility Control
- Radio Access Control
- Measurement Configuration and Provisioning
- Dynamic Resource Allocation (Scheduler)

NG-RAN

**AMF**

- NAS Security
- Idle-State Mobility Processing

**SMF**

- UE IP Address Allocation
- PDU Session Control

**UPF**

- Mobility Anchoring
- PDU Processing

5GC

Internet

# FIG. 6

# FIG. 7

# FIG. 8

UE A | UE B

PDCP ↔ PDCP

RLC ↔ RLC

MAC ↔ MAC

PHY ↔ PHY

PU5-U

(a)

UE A | UE B

RRc ↔ RRC

RLC ↔ RLC

MAC ↔ MAC

PHY ↔ PHY

PU5-C

(b)

# FIG. 9

UE A | UE B

SDAP ⟷ SDAP
PDCP ⟷ PDCP
RLC ⟷ RLC
MAC ⟷ MAC
PHY ⟷ PHY

PU5-U

(a)

UE A | UE B

RRc ⟷ RRC
PDCP ⟷ PDCP
RLC ⟷ RLC
MAC ⟷ MAC
PHY ⟷ PHY

PU5-U

(b)

# FIG. 10

(a)

(b)

# FIG. 11

| Remote UE | Relay UE | gNB |
|---|---|---|

S1100 — Discovery

S1101 — PC5 Connection Establishment

S1102 — RRC Setup Request

S1103 — RRC Setup

S1104 — Prepare PC5 and Uu RLC channel for SRB1

S1105 — RRC Setup Complete

S1106 — Security Mode Command

S1107 — Security Mode Complete

S1108 — RRC Reconfiguration

S1109 — RR Reconfiguration Complete

S1110 — Prepare PC5 and Uu RLC channel for SRB2/DRB

## FIG. 12

| Remote UE | Relay UE | gNB |

S1200 — UL/DL data

S1201 — Measurement configuration and reporting

S1202 — Decision of switching to a target relay UE

S1203 — RRC Reconfiguration and RRC Reconfiguration Complete Message

S1204 — RRC Reconfiguration message

S1205 — PC5 connection establishment, if not exist

S1206 — RRC Reconfiguration Complete Message

S1207 — UL/DL data

## FIG. 13

| performing a measurement on a plurality of candidate relay UEs | ～ S1301 |

↓

| transmitting a measurement report to a first BS | ～ S1302 |

↓

| establishing an RRC connection with one relay UE selected from the plurality of candidate relay UEs | ～ S1303 |

↓

| transmitting a signal to the relay UE | ～ S1304 |

## FIG. 14

| Remote UE | Relay UE | Source gNB | Target gNB |

S1400 — UL/DL data

S1401 — Measurement configuration and reportion

S1402 — Decision of switching to a target relay UE

S1403 — RRC Reconfiguration and RRC Reconfiguration Complete Message

S1404 — RRC Reconfiguration message

S1405 — PC5 connection establishment, if not exist

S1406 — RRC Reconfiguration Complete Message

S1407 — UL/DL data

EP 4 373 157 A1

# FIG. 15

| Remote UE | Relay UE | Source gNB | Target gNB |

0. UL/DL data

1. Measurement configuration and reportion

5. PC5 connection establishment, if not exist

2. Decision of switching to a target relay UE

3. RRC Reconfiguration and RRC Reconfiguration Complete Message

4. RRC Reconfiguration message

6. RRC Reconfiguration Complete Message

7. UL/DL data

## FIG. 16

Remote UE     Relay UE     Source gNB     Target gNB

S1600. PC5 connection

S1601. Measurement & Reporting

S1602. HO request(send Relay UE's context)and ACK

S1603. HO decision of Relay UE

S1604. RRC Reconfiguration

S1605. HO possibility notification

S1606. RRC Reconfiguration Complete

S1607. HO (complete) notification

S1608. RRC Resume Request

S1609. Remote UE context request

S1610. Remote UE context receive

# FIG. 17

| Remote UE | Relay UE | Source gNB | Target gNB |

S1700. PC5 connection

S1701. Measurement & Reporting

S1702. HO request(send Relay UE's context)and ACK

S1703. HO decision of Relay UE

S1704. RRC Reconfiguration

If there is no response within a predetermined period of time, it is considered Relay Reselection.

S1705. HO possibility notification

S1706. Hang OnToRelay message

S1707. RRC Resume Request

S1708. Remote UE context request

S1709. Remote UE context receive

## FIG. 18

# FIG. 19

<u>1</u>

# FIG. 20

FIG. 21

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 22

Vehicle or autonomous driving vehicle (100)

140m

Virtual World

140n

| Communication unit (110) |
| Control unit (120) |
| Memory unit (130) |
| I/O unit (140a)<br>(e.g., HUD) |
| Positioning unit (140b)<br>(e.g., GPS, sensor) |

FIG. 23

XR device (100a)

100a

Communication unit (110)

Control unit (120)

Memory unit (130)

I/O unit (140a)

Sensor unit (140b)

Power supply unit (140c)

100b

FIG. 24

Robot (100)

Communication unit (110)

Control unit (120)

Memory unit (130)

I/O unit (140a)

Sensor unit (140b)

Driving unit (140c)

## FIG. 25

<u>100</u>

120 — Communication unit

140a — Input unit

140c — Learning Processor unit

Control unit

Memory unit — 130

Output unit — 140b

Sensor unit — 140d

120

## INTERNATIONAL SEARCH REPORT

| International application No. |
|---|
| **PCT/KR2022/010392** |

| A. | CLASSIFICATION OF SUBJECT MATTER |
|---|---|

**H04W 36/00**(2009.01)i; **H04W 36/08**(2009.01)i; **H04W 40/36**(2009.01)i; **H04W 40/22**(2009.01)i; **H04W 92/18**(2009.01)i; **H04W 76/11**(2018.01)i

According to International Patent Classification (IPC) or to both national classification and IPC

| B. | FIELDS SEARCHED |
|---|---|

Minimum documentation searched (classification system followed by classification symbols)

H04W 36/00(2009.01); H04W 36/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 릴레이 UE(relay UE), 측정(measurement), RRC 연결(RRC connection), 선택 (selection), reconfiguration, 제1/2 기지국(first/second base station), layer 2 ID, path switching, local ID

| C. | DOCUMENTS CONSIDERED TO BE RELEVANT |
|---|---|

| Category* | Citation of document, with indication, where appropriate, of the relevant passages | Relevant to claim No. |
|---|---|---|
| A | VIVO. Service Continuity and Adaptation Layer for L2 SL Relay. R2-2104961, 3GPP TSG-RAN WG2 Meeting #114 electronic, E-Meeting. 11 May 2021. See sections 2-3.2; and figure 2. | 1-15 |
| A | QUALCOMM INCORPORATED. Summary of offline#611 - Remaining proposals on relay (re)selection (Qualcomm). R2-2104415, 3GPP TSG RAN WG2 Meeting #113bis-e, E-Conference. 23 April 2021. See pages 3 and 19. | 1-15 |
| A | ERICSSON. Discussion on service continuity for L2 sidelink relay. R2-2105774, 3GPP TSG-RAN WG2 #114-e, Electronic meeting. 10 May 2021. See sections 2-2.2.2. | 1-15 |
| A | INTEL CORPORATION. Service Continuity support for L2 U2N Relaying. R2-2104891, 3GPP TSG RAN WG2 Meeting #114e, e-Meeting. 11 May 2021. See sections 2-3. | 1-15 |
| A | US 2017-0086114 A1 (LG ELECTRONICS INC.) 23 March 2017 (2017-03-23) See paragraphs [0280]-[0295]; and claim 1. | 1-15 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2022** | **21 October 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/010392**

| Patent document cited in search report | Publication date (day/month/year) | Patent family member(s) | Publication date (day/month/year) |
|---|---|---|---|
| US 2017-0086114 A1 | 23 March 2017 | US 10136372 B2 | 20 November 2018 |

Form PCT/ISA/210 (patent family annex) (July 2022)